(19) Europäisches Patentamt / European Patent Office / Office européen des brevets

(11) **EP 2 362 966 B1**

(12) **FASCICULE DE BREVET EUROPEEN**

(45) Date de publication et mention de la délivrance du brevet:
**03.10.2012 Bulletin 2012/40**

(21) Numéro de dépôt: **09783949.2**

(22) Date de dépôt: **12.10.2009**

(51) Int Cl.:
*G21C 1/02* *(2006.01)*  *G21C 1/03* *(2006.01)*
*G21C 1/32* *(2006.01)*  *G21C 15/18* *(2006.01)*
*G21C 15/247* *(2006.01)*

(86) Numéro de dépôt international:
**PCT/EP2009/063274**

(87) Numéro de publication internationale:
**WO 2010/057720 (27.05.2010 Gazette 2010/21)**

(54) **REACTEUR NUCLEAIRE SFR DE TYPE INTEGRE COMPACT ET A FONCTIONNEMENT PAR CONVECTION AMELIORE**

SFR-KERNREAKTOR DES INTEGRIERTEN TYPS MIT VERBESSERTEM KONVEKTIONSBETRIEB

SFR NUCLEAR REACTOR OF THE INTEGRATED TYPE WITH IMPROVED CONVECTION OPERATION

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **19.11.2008 FR 0857862**

(43) Date de publication de la demande:
**07.09.2011 Bulletin 2011/36**

(73) Titulaire: **Commissariat à l'Énergie Atomique et aux Énergies Alternatives 75015 Paris (FR)**

(72) Inventeur: **GAUTIER, Guy-Marie F-84120 Pertuis (FR)**

(74) Mandataire: **Ilgart, Jean-Christophe et al BREVALEX 95 rue d'Amsterdam 75378 Paris Cedex 8 (FR)**

(56) Documents cités:
EP-A- 0 067 103    DE-A1- 3 826 864
FR-A- 2 397 044    JP-A- 2 234 097
JP-A- 3 122 593    JP-A- 4 110 694

EP 2 362 966 B1

**Description**

**DOMAINE TECHNIQUE**

L'invention concerne un réacteur nucléaire refroidi au sodium dénommé SFR (Sodium Fast Reactor), qui fait partie de la famille des réacteurs dits de quatrième génération.

Plus précisément, l'invention concerne un réacteur nucléaire refroidi au sodium, de type intégré, c'est-à-dire pour lequel le circuit primaire est totalement contenu dans une cuve contenant également les pompes primaires et des échangeurs de chaleur.

L'invention propose une architecture innovante du circuit primaire contenu dans la cuve du réacteur permettant d'en améliorer sa compacité, de faciliter la conception de certaines pièces et d'améliorer la convection naturelle du sodium dans la cuve.

**ETAT DE L'ART ANTERIEUR**

Les réacteurs nucléaires refroidis au sodium (SFR) comportent habituellement une cuve dans laquelle se trouve le coeur, avec au-dessus du coeur un bouchon de contrôle du coeur. L'extraction de la chaleur s'effectue en faisant circuler le sodium dit sodium primaire au moyen d'un système de pompage placé dans la cuve. Cette chaleur est transférée à un circuit intermédiaire, via un ou plusieurs échangeur(s) intermédiaire(s) (EI), avant d'être utilisée pour produire de la vapeur dans un générateur de vapeur (GV). Cette vapeur est ensuite envoyée dans une turbine pour la transformer en énergie mécanique, à son tour transformée en énergie électrique.

Le circuit intermédiaire comprend, en tant que caloporteur, du sodium et a pour but d'isoler (ou autrement dit contenir) le sodium primaire qui est dans la cuve, par rapport au générateur de vapeur et ce, en raison des réactions violentes susceptibles de se produire entre le sodium et l'eau-vapeur contenue dans le générateur de vapeur en cas d'une éventuelle rupture d'un tube de ce dernier. Ainsi, l'architecture met en évidence deux circuits en sodium: l'un dit primaire chargé de transférer la chaleur entre le coeur et un (des) échangeur(s) de chaleur intermédiaire(s), l'autre dit secondaire chargé de transférer la chaleur de l' (des) échangeur(s) intermédiaire(s) vers le générateur de vapeur.

Tous les réacteurs refroidis au sodium (SFR) présentent des caractéristiques techniques communes. La cuve est fermée sur le dessus par une dalle de fermeture afin que le sodium primaire ne soit pas en contact avec l'air extérieur. -Tous les composants (échangeurs, pompes, tuyaux, ...) traversent cette dalle verticalement pour pouvoir être démontés en les soulevant verticalement par un dispositif de levage. Les dimensions des trous de passage dans cette dalle sont fonction de la taille et du nombre de composants. Plus les trous sont importants (en dimension et en nombre), plus le diamètre de la cuve sera important.

Les différentes solutions techniques retenues à ce jour peuvent être classées dans deux grandes familles de réacteurs: les réacteurs de type à boucles et les réacteurs de type intégré.

Les réacteurs SFR de type à boucles sont caractérisés par le fait que l'échangeur intermédiaire et les dispositifs de pompage du sodium primaire sont situés hors de la cuve.

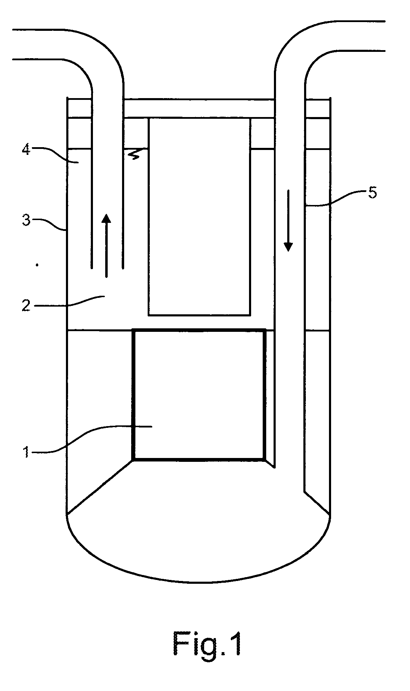

Un exemple de réacteur selon cette architecture, est celui en projet sous l'appellation JSFR tel que représenté schématiquement en figure 1. Dans le réacteur SFR à boucles de la figure 1, le sodium traverse le coeur 1 pour emporter les calories produites. A la sortie du coeur 1, il débouche dans une zone 2 de la cuve 3 du réacteur: cette zone 2 est couramment appelée collecteur chaud. Par boucle, un tuyau 4 débouche dans le collecteur chaud pour aspirer le sodium primaire et conduire ce sodium vers l'échangeur intermédiaire (non représenté sur la figure), où il cédera la chaleur au sodium secondaire. A la sortie de l'échangeur intermédiaire, le sodium primaire est repris par une pompe et est envoyé directement en entrée du coeur 1 c'est-à-dire en dessous du coeur 1, à l'aide du tuyau 5 débouchant en dessous du coeur 1.

Le principal avantage d'un réacteur SFR de type à boucles est, pour une puissance donnée, d'obtenir une cuve de plus petit diamètre que celle d'un réacteur SFR de type intégré, car la cuve contient moins de composants. La cuve est donc plus facilement fabricable et donc moins chère. Par contre, un réacteur SFR de type à boucles présente l'inconvénient majeur de faire sortir du sodium primaire de la cuve, ce qui complique l'architecture de circuit primaire et pose des problèmes de sûreté importants. Ainsi, les avantages liés à la taille réduite et la fabrication plus aisée de la cuve sont annulés par les surcoûts induits par l'ajout de dispositifs liés à la conception des boucles et de moyens spéciaux pour gérer les éventuelles fuites de sodium primaire.

Les réacteurs SFR de type intégré sont caractérisés par le fait que les échangeurs intermédiaires et les moyens de pompage du sodium primaire sont intégralement situés dans la cuve, ce qui permet d'éviter de faire sortir le circuit primaire hors de la cuve et constitue donc un avantage important en terme de sûreté par rapport à un réacteur SFR de type à boucles.

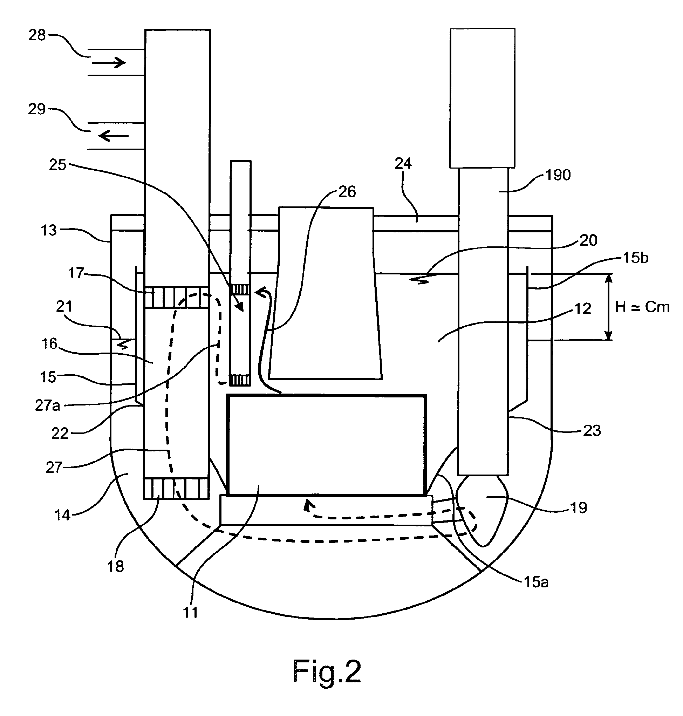

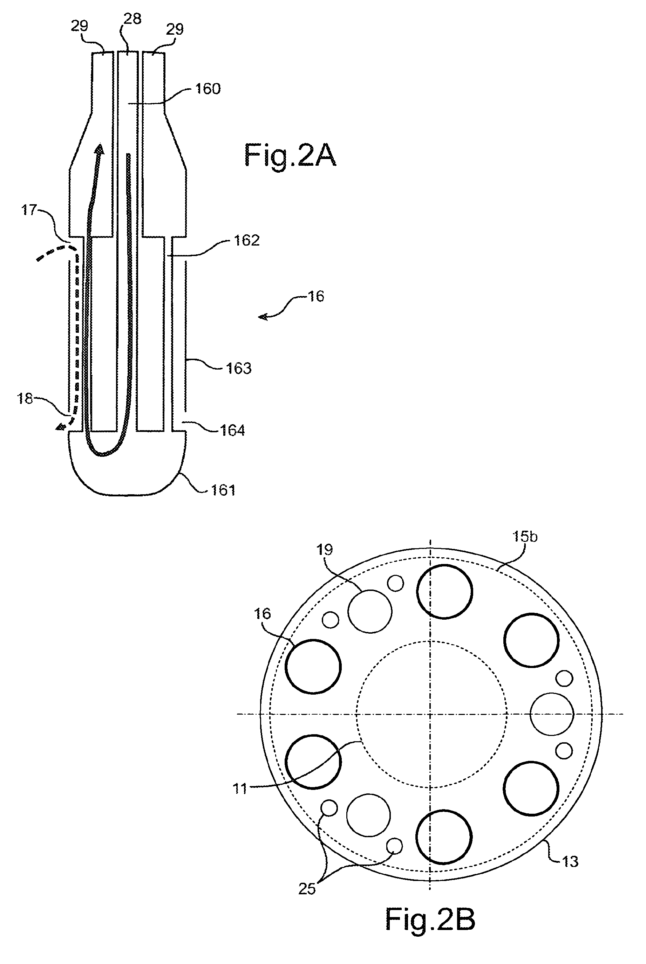

Un réacteur avec une telle architecture a déjà été retenu dans le réacteur « SuperPhénix » en France, ou dans celui en projet sous l'appellation EFR, tel que décrit dans le manuel *« Les Techniques de l'Ingénieur B 3 171 »* et tel que représenté schématiquement en figure 2. Dans le réacteur SFR de type intégré en figure 2, en fonctionnement normal du réacteur, le sodium primaire traverse le coeur 11 pour emporter les calories produites. A la sortie du coeur 11, il arrive dans une zone 12 de la cuve 13 du réacteur fermée par la dalle de fermeture 24 : cette zone 12 est couramment appelée collecteur chaud. Ce collecteur chaud est séparé d'une autre zone 14 appelée collecteur froid par une paroi 15 de forme cylindriquo-conique appelée redan. La forme du redan 15 est dite cylindriquo-conique car il est constitué d'une partie inférieure 15a qui entoure le coeur 11 et qui a une forme générale de tronc de cône et d'une partie supérieure 15b qui est une portion cylindrique. Chaque échangeur intermédiaire 16 est composé d'un faisceau de tubes. Un exemple de réalisation d'un échangeur intermédiaire 16 utilisé dans les réacteurs SFR de type intégré est montré en figure 2A. L'échangeur intermédiaire 16 représenté comprend un conduit central 160 d'alimentation du sodium secondaire relié à un tuyau d'amenée 28 et débouchant sur une calotte hémisphérique 161 appelée boite de distribution qui distribue le sodium secondaire (représenté en trait plein) dans un faisceau de tubes 162. Il comprend également une cloison annulaire 163 qui délimite, autour du faisceau de tubes 162, une cavité 164 avec des fenêtres 17 en partie supérieure et des fenêtres 18 en partie inférieure. Ainsi, en d'autres termes, l'échangeur intermédiaire 16 représenté en figure 2A, est constitué d'un faisceau de tube 162 dans lequel circule le sodium secondaire et entre lesquels Le sodium primaire circule entre les tubes 162.

Le sodium secondaire entre dans le tube central, traverse l'échangeur, et débouche en bas de l'échangeur dans la boîte de distribution 161. Grâce à cette boîte, le sodium alimente tous les tubes du faisceau de tubes 162 puis ressort au niveau d'un collecteur de sortie.

Le sodium primaire entre dans l'échangeur par une fenêtre d'entrée 17 située en partie supérieure de l'échangeur, passe entre les tubes et cède sa chaleur au sodium secondaire. Il ressort par une fenêtre de sortie 18 située en partie inférieure de l'échangeur.

Les contraintes de dimensionnement d'un tel composant 16 sont selon l'état de l'art :

- le transfert de la puissance requise pour les critères de températures d'entrée et de sortie du sodium primaire et du sodium secondaire voulues,
- la perte de charge coté primaire doit être compatible avec la charge motrice pour faire circuler le sodium : écoulement gravitaire entre le collecteur chaud 12 et le collecteur froid 14 avec une charge motrice de 2 m environ,
- la longueur de la zone d'échange doit être compatible avec la hauteur de la cuve 13, avec la fenêtre d'entrée 17 de l'échangeur intermédiaire 16 immergée dans le collecteur chaud 12.

Ainsi, l'agencement de chaque échangeur intermédiaire 16 dans la cuve 13 est tel qu'il s'étend verticalement et que sa partie inférieure traverse le redan 15. Plus exactement, les fenêtres 18 de la partie inférieure de l' (des) échangeur(s) intermédiaire(s) 16 sont situées dans le collecteur froid 14. Le trajet suivi par le sodium primaire est schématisé en pointillés sur la figure 2. Le sodium primaire entre ainsi dans chaque échangeur intermédiaire 16 par ses fenêtres d'entrée 17 situées dans le collecteur chaud 12. En longeant les tubes 162 de 1' (des) échangeur(s) intermédiaire (s) 16, il cède sa chaleur au sodium secondaire, et sort de l'échangeur intermédiaire par les fenêtres 18. Dans le collecteur froid 14, le sodium est aspiré par des moyens de pompage 19 et est envoyé directement vers l'entrée du coeur 11, c'est-à-dire en dessous de celui-ci. Les moyens de pompage 19 sont constitués par des pompes électromécaniques dont l'arbre 190 s'étend verticalement sensiblement sur toute la hauteur de la cuve 13 depuis le coeur 11 et traverse la dalle de fermeture 24. La circulation du sodium dans l'les) échangeur(s) intermédiaire(s) 16 s'effectue donc uniquement par gravité entre le collecteur chaud 12 et le collecteur froid 14. Pour des raisons de dimensionnement de 1' (des) échangeur (s) intermédiaire(s) et d'encombrement géométrique, la charge motrice du sodium primaire Cm entre les deux collecteurs 12, 14 est calibrée à une valeur d'environ 2 m correspondant à la différence H de niveau entre celui 20 du collecteur chaud 12 et celui 21 du collecteur froid 14.

A ce jour, pour des raisons d'efficacité de convection maximale, il faut prévoir une étanchéité optimale entre les composants (échangeur(s) intermédiaire(s) 16 et moyens de pompage 19) et le redan 15 cylindriquo-conique. Sur la figure 2, l'étanchéité doit ainsi être optimale au niveau des traversées 22 et 23. L'étanchéité doit ainsi être optimale pour éviter un by-pass d'une partie du sodium primaire depuis le collecteur chaud 12 directement vers le collecteur froid 14 sans passer par le(s) échangeur(s) intermédiaire(s) 16.

Le redan 15 est un composant essentiel des réacteurs SFR de type intégré connus à ce jour. Il est constitué d'une unique paroi séparant le collecteur chaud 12 du collecteur froid 14. Comme précisé ci-dessus et montré en figure 2, sa forme générale est cylindriquo-conique. La partie conique 15a située dans la partie inférieure du redan, est traversée par les gros composants (les échangeurs intermédiaires 16 et les pompes 19, 190). La partie cylindrique 15b est une virole verticale située dans la partie supérieure du redan. Le redan 15 est une pièce généralement réalisée en mécano soudé et difficile à concevoir pour les raisons suivantes :

- sa forme et de sa taille sont conséquentes (de l'ordre d'une quinzaine de mètre pour un réacteur de 3600 MW thermique, du type de celui en projet EFR),

- l'écart de pression qu'il subit entre les deux collecteurs 12,14 en fonctionnement normal du réacteur est très important (de l'ordre de deux mètres de colonne de sodium),
- les contraintes thermomécaniques dues aux différences de température entre collecteur chaud 12 et froid 14 en fonctionnement normal du réacteur sont conséquentes (de l'ordre de 150°C pour les réacteurs actuels),
- les étanchéités à réaliser au niveau des traversées 22, 23 du redan dans sa partie conique 15a par les échangeurs intermédiaires 16 et les pompes électromécaniques 19, 190 sont extrêmement contraignantes : en effet, en cas de défaut d'étanchéité au niveau des dites traversées, il y a un risque important d'avoir un by-pass de l'échangeur intermédiaire 16, c'est-à-dire une partie du débit du sodium depuis le collecteur chaud 12 vers le collecteur froid 14 au niveau des traversées non étanches. De plus, les moyens d'étanchéité choisis doivent permettre le démontage des composants (échangeurs intermédiaires 16, pompes électromécaniques 19) en vue de leur maintenance et permettre les déplacements différentiels de quelques centimètres dus aux dilatations thermiques entre composants.

En outre en dehors du fonctionnement normal, les concepteurs de réacteurs nucléaires de puissance doivent prendre en compte la situation d'arrêt du réacteur : tous les réacteurs doivent ainsi disposer de systèmes chargés d'évacuer la puissance résiduelle du coeur. Cette puissance résiduelle provient de la décroissance radioactive des produits de fission qui ont été créés lors des réactions nucléaires lorsque le réacteur était en puissance (fonctionnement normal). Pour des raisons de sûreté et afin d'assurer une redondance la plus importante possible, ces circuits doivent être différents au tant que possible du circuit normal d'évacuation de la puissance thermique lorsque le réacteur est en puissance: ils ne doivent pas utiliser le générateur de vapeur sur lequel débouche le sodium secondaire qui évacue la chaleur du sodium primaire. L'architecture générale des systèmes évacuation de puissance résiduelle doit en outre être compatible avec le fonctionnement normal du réacteur. Généralement, ces moyens d'évacuation de puissance résiduelle ne sont mis en action que lorsque le réacteur est à l'arrêt.

Ainsi, les moyens pour évacuer la puissance résiduelle communs à la plupart des réalisations ou des projets, comprennent plusieurs échangeurs spécifiques dédiés à la fonction d'évacuation de la puissance résiduelle. Ces échangeurs 25 sont verticaux et traversent la dalle de fermeture 24 du réacteur. De part leur fonction assignée dans le réacteur, ces échangeurs 25 ont une taille plus petite que les échangeurs intermédiaires 16. Pour être efficace, notamment en cas de défaillance des pompes électromécaniques 19, le sodium primaire doit pouvoir circuler par convection naturelle entre le coeur 11 et les échangeurs 25 d'évacuation de puissance résiduelle. Or, d'une façon générale, la fiabilité et l'efficacité d'une convection naturelle passe par la définition d'un chemin hydraulique le plus simple possible qui peut être obtenu en respectant les recommandations suivantes :

- la source chaude (ici le coeur 11 du réacteur nucléaire) doit être située en partie inférieure,
- la source froide (ici l'échangeur dédié à l'évacuation de la puissance résiduelle 25) doit être située en partie supérieure,
- le chemin hydraulique constituant la colonne chaude située entre la sortie de la source chaude et l'entrée de la source froide, doit être le plus monotone possible (pas de variation altimétrique),
- le chemin hydraulique constituant la colonne froide située en sortie de la source froide et l'entrée de la source chaude, doit être le plus monotone possible (pas de variation altimétrique),
- la colonne chaude et la colonne froide doivent être séparées pour éviter un mélange du sodium caloporteur entre les deux colonnes.

Or, dans les réacteurs SFR refroidis au sodium de type intégré connus à ce jour, les échangeurs 25 dédiés à l'évacuation de puissance résiduelle sont situés soit dans le collecteur chaud 12 soit dans le collecteur froid 14. Quel que soit son emplacement, le chemin hydraulique du sodium primaire passe par l'échangeur intermédiaire avec des variations altimétriques sur les colonnes chaude et/ou froide dégradant ainsi les performances hydrauliques de la convection naturelle. Ainsi, tel qu'illustré en figure 2, les échangeurs 25 sont intégralement situés dans la zone chaude ou autrement dit collecteur chaud 12. Le chemin hydraulique est constitué de la colonne chaude représenté schématiquement par la flèche en traits pleins 26 et de la colonne froide 27 représenté par la flèche en pointillés 27. Ainsi, sur cette figure 2, la colonne chaude 26 est régulièrement montante, la variation altimétrique est monotone. Par contre, la colonne froide 27 comporte une variation altimétrique non monotone, puisque le sodium primaire à la sortie de l'échangeur 25 doit remonter dans le collecteur chaud 12 (illustré par la partie 27a de la flèche 27) avant d'entrer dans l'échangeur intermédiaire 16 pour rejoindre le coeur 11 après avoir traversé une pompe électromécanique 19. Dans le collecteur chaud 12, la colonne chaude 26 et la colonne froide 27a ne sont pas physiquement séparées. Cela n'est pas un design optimum de la convection naturelle, puisque le sodium primaire plus froid sortant de l'échangeur 25 peut se mélanger dans le collecteur chaud 12 avec le sodium primaire plus chaud entrant dans ce même échangeur 25.

Une amélioration immédiate qui pourrait venir à l'esprit de l'homme de l'art, consisterait à mettre les échangeurs 25 dédiés à l'évacuation de la puissance résiduelle entre le collecteur chaud 12 et le collecteur froid 14 en traversant le redan 15, comme c'est le cas pour les échangeurs intermédiaires 16 avec leurs traversées 22. Or, cela ne peut être réalisé car en fonctionnement normal, cela reviendrait à constituer nécessairement un by-pass des échangeurs intermédiaires 16 par les échangeurs 25 dédiés à l'évacuation de puissance résiduelle, c'est-à-dire nécessairement avec une partie du sodium primaire passant par les échangeurs 25. La conséquence inévitable serait de dégrader les performances du réacteur en fonctionnement normal.

Il existe donc, à ce jour, une contradiction technique intrinsèque entre le circuit d'évacuation de la chaleur en fonctionnement normal du coeur et le circuit d'évacuation de la chaleur résiduelle à l'arrêt et des pompes électromécaniques puisque les solutions techniques retenues qui optimisent l'évacuation de la chaleur en fonctionnement normal dégradent l'évacuation de la chaleur résiduelle, et inversement.

Un dernier inconvénient des réacteurs SFR refroidis au sodium de type intégré connus à ce jour, réside dans la taille importante de la cuve. Cette taille importante est liée à la contrainte de placer à l'intérieur de celle-ci tous les composants du réacteur nécessaires à la fois à son fonctionnement normal et à son fonctionnement à l'arrêt, notamment les échangeurs intégrés 16, 25, les pompes électromécaniques 19, les structures internes nécessaires à la définition des chemins hydrauliques. La figure 2B représente un réacteur du projet EFR en vue de dessus de la dalle de fermeture 24. Sur cette figure sont représentés en traits pleins les trous nécessaires au passage des principaux composants et en traits pointillés l'agencement du coeur 11 et de la partie cylindrique 15b du redan 15. On distingue donc que se répartissent sur la périphérie de la cuve, un nombre de six échangeurs intermédiaires identiques 16, trois pompes électromécaniques 19 pour la circulation du sodium dans la cuve 13 en fonctionnement normal et six échangeurs 25 dédiés à l'évacuation de la puissance résiduelle.

Ce type d'architecture implique donc une cuve de grande taille qui est pénalisante sur le coût de construction du réacteur. Pour le réacteur en projet EFR tel qu'illustré en figure 2B, le diamètre de la cuve est environ de 17 m.

Les inventeurs sont donc parvenus à la conclusion que même si les réacteurs SFR de type intégré présentent des avantages importants en termes de sûreté par rapport aux réacteurs SFR de type à boucles, ils présentent intrinsèquement plusieurs inconvénients qui peuvent être résumés de la manière suivante :

- une conception et une réalisation difficile du redan entre collecteur chaud et collecteur froid,
- une compatibilité délicate entre le fonctionnement normal en convection forcée et le fonctionnement en convection naturelle de l'évacuation de la puissance résiduelle lorsque les pompes électromécaniques sont défaillantes,
- une taille de cuve importante qui pénalise le concept d'un point de vue économique.

L'invention a pour but de résoudre au moins en partie les problèmes posés par la réalisation des réacteurs refroidis au sodium (SFR) de type intégré, tels qu'exposés ci-dessus.

Plus précisément, un but de l'invention est de proposer un réacteur nucléaire refroidi au sodium (SFR) de type intégré qui soit compact et dont la conception lui permette d'être plus économique à la construction tout en améliorant la sûreté en cas de défaillance des moyens de pompage permettant la convection forcée.

## EXPOSE DE L'INVENTION

Conformément à l'invention, cet objectif est atteint par un réacteur nucléaire SFR de type intégré, comprenant une cuve adaptée pour être remplie de sodium et à l'intérieur de laquelle sont agencés un coeur, des moyens de pompage pour faire circuler le sodium primaire, des premiers échangeurs de chaleur, dits échangeurs intermédiaires, adaptés pour évacuer la puissance produite par le coeur en fonctionnement normal des seconds échangeurs de chaleur adaptés pour évacuer la puissance résiduelle produite par le coeur à l'arrêt lorsque les moyens de pompage sont également à l'arrêt, un dispositif de séparation délimitant une zone chaude et une zone froide dans la cuve, caractérisé en ce que :

- le dispositif de séparation est constitué de deux parois chacune avec une partie sensiblement verticale agencée en entourant le coeur et une partie sensiblement horizontale, les parties sensiblement horizontales étant séparées l'une de l'autre d'une hauteur et l'espace délimité au dessus de la partie horizontale de la paroi supérieure formant la zone chaude tandis que l'espace délimité en dessous de la partie horizontale de la paroi inférieure forme la zone froide et les parties sensiblement horizontales sont agencées avec jeux par rapport à la cuve,
- les échangeurs intermédiaires sont agencés sensiblement verticalement avec jeux dans des premiers ajours pratiqués dans chaque paroi horizontale du dispositif de séparation de manière à localiser leurs fenêtres de sortie en dessous de la partie horizontale de la paroi inférieure,
- les moyens de pompage à débit variable sont divisés en deux groupes en série hydraulique, l'un agencé en dessous de la partie horizontale de la paroi inférieure pour faire circuler le sodium de la zone froide vers la zone chaude en traversant le coeur, l'autre agencé à côté des échangeurs intermédiaires pour faire circuler le sodium de la zone chaude vers la zone froide en traversant les échangeurs intermédiaires,
- des moyens d'acquisition de température sont agencés dans l'espace délimité entre les parties horizontales des deux parois en étant répartis selon un axe sensiblement vertical pour déterminer en temps réel la stratification thermique dans cet espace,

- des moyens d'asservissement reliés d'une part aux moyens d'acquisition de température et d'autre part aux deux groupes de pompage sont prévus pour modifier si nécessaire le débit d'au moins un groupe de pompage afin de maintenir un niveau satisfaisant de stratification en fonctionnement normal,
- les seconds échangeurs sont agencés sensiblement verticalement au dessus de la zone froide,
- des moyens pour permettre la convection naturelle du sodium primaire depuis les seconds échangeurs vers la zone froide lorsque le coeur et les moyens de pompage sont également à l'arrêt,
- l'ensemble des jeux et la hauteur entre parois du dispositif de séparation sont préalablement déterminés pour, en fonctionnement normal, reprendre les déplacements différentiels entre les parois, échangeurs et cuve et pour permettre d'établir en fonctionnement normal une stratification thermique du sodium primaire dans l'espace délimité entre les parties horizontales des deux parois et pour, en cas d'arrêt inopiné d'un seul groupe de pompage, limiter les efforts mécaniques subis par les parois dus à la partie du débit de sodium primaire passant dans lesdits jeux.

Par niveau de « stratification satisfaisant » il faut comprendre dans le cadre de l'invention qu'en fonction de la puissance nominale du réacteur, on cherche dans l'espace inter-parois à obtenir un profil de température déterminé sur sa hauteur, de préférence avec des variations de température uniformes, et à maintenir la température la plus chaude (à proximité immédiate de la partie horizontale de la paroi supérieure) et la température la plus froide (à proximité immédiate de la partie horizontale de la paroi inférieure) à des valeurs prédéterminées et stables dans le temps.

Ainsi, l'invention prévoit tout d'abord que le dispositif de séparation autrement appelé redan, entre la zone chaude et la zone froide, est constitué de deux parois de dimensions différentes ajourées chacune avec une partie sensiblement verticale agencée en entourant le coeur et une partie sensiblement horizontale dans lesquels les composants d'évacuation de la chaleur sont agencés avec jeux. Cela va à l'encontre des dispositifs de séparation appelés redans de l'art antérieur à unique paroi dans laquelle sont agencés de manière la plus étanche possible les composants d'évacuation de chaleur.

Cette conception selon l'invention à double paroi ajourée permet de résoudre le problème de la compatibilité entre le chemin hydraulique pour la convection naturelle lorsque les dispositifs de pompage sont défaillants et le chemin hydraulique pour la convection forcée en fonctionnement normal. Ainsi, en fonctionnement normal, l'indispensable séparation entre zone chaude et zone froide est obtenue non par une étanchéité physique mais par la création d'une « zone calme » à très faible vitesse d'écoulement où s'établit une stratification thermique, cette zone étant située entre les deux parois du dispositif de séparation, c'est-à-dire entre le collecteur chaud et le collecteur froid qui sont des zones où les écoulements sont à fortes vitesses. En fonctionnement d'évacuation de la puissance résiduelle, la convection naturelle est améliorée, car le chemin hydraulique entre le coeur et l'échangeur dédié à l'évacuation de la puissance résiduelle est plus simple : le transfert du sodium depuis le collecteur chaud vers le collecteur froid s'effectue directement à travers les parois ajourées. Cela va également à l'encontre des solutions retenues dans l'art antérieur, selon lesquelles le transfert du sodium du collecteur chaud vers le collecteur froid s'effectuait nécessairement en traversant les échangeurs intermédiaires.

Un autre avantage important de la conception selon l'invention est sa facilité de réalisation pour les raisons suivantes :

- le dispositif de séparation est constitué de deux parois ayant des formes simples avantageusement en forme de L renversé (pas de virole conique), la zone « calme » d'écoulement étant délimitée en haut et en bas par les parties horizontales du L renversé,

- la face du dessus de la paroi supérieure est isotherme puisque soumise au sodium le plus chaud, la face de dessous de la paroi inférieure est également isotherme puisque soumise au sodium le plus froid,

- il n'y a plus d'étanchéité à effectuer au niveau des composants traversant les parois du dispositif de séparation entre zone chaude et zone froide,

- la virole verticale du redan présente dans les réacteurs SFR de type intégré de l'art antérieur est supprimée,

- il n'y a plus d'écart de pression entre chaque face du dispositif de séparation du fait des ajours dans les deux parois de ce dernier.

Dans la conception selon l'invention, l'homme de l'art veille à ce que la section des ajours dans les parois constituant le dispositif de séparation et donc les jeux avec les différents composants les traversant soit :

o suffisamment grande pour que lors d'un fonctionnement anormal comme un arrêt complet intempestif d'un des deux groupes de moyen de pompage, les vitesses à travers les jeux définis entre ajours et composants n'induisent pas d'efforts mécaniques trop importants sur les parois constituant le dispositif de séparation,

o suffisamment faible pour qu'en fonctionnement normal du réacteur les vitesses des écoulements parasites ne viennent pas perturber la stratification thermique dans la zone calme délimitée entre les deux parois du dispositif de séparation,

o prévue pour définir un diamètre hydraulique faible (de préférence inférieur à environ 1% du diamètre de la cuve) pour réduire les débits parasites au travers des jeux.

L'invention propose ensuite une amélioration de l'échange thermique dans les échangeurs intermédiaires grâce à l'utilisation de deux groupes des moyens de pompage en série hydraulique, l'un faisant circuler le sodium de la zone froide vers la zone chaude en traversant le coeur, l'autre faisant circuler le sodium de la zone chaude vers la zone froide en traversant les échangeurs principaux de chaleur ou autrement appelés échangeurs intermédiaires. Ces moyens de pompage permettent ainsi de faire fonctionner les échangeurs intermédiaires en convection forcée au lieu d'une convection naturelle par gravité. On réduit donc l'encombrement du sous-ensemble constitué par les échangeurs intermédiaires et moyens de pompage par rapport au diamètre du même sous-ensemble en convection naturelle dans les réacteurs SFR de type intégré selon l'état de l'art.

Selon l'invention, il y a donc un effet de synergie entre la conception du dispositif de séparation entre zone chaude et zone froide au moyen de deux parois séparées ajourées et l'utilisation de moyens de pompage pour réaliser une convection forcée dans les échangeurs intermédiaires. Un tel effet de synergie contribue à améliorer les performances d'échange thermique dans les échangeurs intermédiaires.

Selon l'invention, les moyens pour permettre la convection naturelle du sodium primaire depuis les seconds échangeurs vers la zone froide lorsque le coeur et les moyens de pompage sont également à l'arrêt peuvent être constitués uniquement par les jeux d'une part entre les parois du dispositif de séparation et la cuve et d'autre part entre les premiers échangeurs et les premiers ajours. Ces moyens de convection naturelle du sodium primaire depuis les seconds échangeurs peuvent être également être constitués en sus par des ajours supplémentaires (ci-après second et troisième ajours) réalisés dans les parois du dispositif de séparation si les pertes de charge induites par les jeux mentionnés ci-dessus sont trop importantes, c'est-à-dire lorsque lesdites pertes de charge réduisent le débit généré par convection naturelle depuis les seconds échangeurs à un niveau insuffisant.

Les moyens d'acquisition des paramètres physiques permettant le calcul de la stratification, les moyens d'asservissement entre les deux groupes de pompage en série hydraulique permettent de maintenir un niveau satisfaisant de stratification thermique.

Selon un mode de réalisation, le groupe des moyens de pompage agencé à côté des échangeurs intermédiaires pour faire circuler le sodium de la zone chaude vers la zone froide en traversant les échangeurs intermédiaires est en aval de ceux-ci.

Selon un autre mode de réalisation, le groupe des moyens de pompage agencé à côté des échangeurs intermédiaires pour faire circuler le sodium de la zone chaude vers la zone froide en traversant les échangeurs intermédiaires est en amont de ceux-ci.

Avantageusement, le groupe des moyens de pompage agencé à côté des échangeurs intermédiaires pour faire circuler le sodium de la zone chaude vers la zone froide en traversant les échangeurs intermédiaires comprend des pompes électromagnétiques et/ou des pompes rotodynamiques dépourvues de volute.

Selon une variante de réalisation préférée de l'invention, les pompes électromagnétiques et/ou les pompes rotodynamiques dépourvues de volute agencées à côté des échangeurs intermédiaires, en amont ou en aval de ceux-ci pour faire circuler le sodium de la zone chaude vers la zone froide sont en outre agencées en circuit fermé avec les fenêtres d'entrée des échangeurs intermédiaires.

De préférence encore dans le cas où les pompes électromagnétiques ou rotodynamiques sont placées en amont de l'échangeur intermédiaire, au moins une pompe électromagnétique ou rotodynamique est fixée en étant accolée dans le sens de sa hauteur à l'enveloppe extérieure d'un échangeur intermédiaire séparant les fenêtres d'entrée et de sortie et dans lequel un conduit relie directement la sortie de la pompe et l'une des fenêtres d'entrée de l'échangeur intermédiaire.

De préférence encore dans le cas où les pompes électromagnétiques sont placées en aval de l'échangeur intermédiaire, au moins une pompe électromagnétique est fixée en étant accolée dans le sens de sa hauteur à l'enveloppe extérieure d'un échangeur intermédiaire séparant les fenêtres d'entrée et de sortie et dans lequel un conduit relie directement l'une des fenêtres de sorties de l'échangeur et l'entrée de la pompe.

Avantageusement, le groupe de moyens de pompage agencé en dessous de la paroi inférieure pour faire circuler le sodium de la zone froide vers la zone chaude en traversant le coeur comprend des pompes électromagnétiques.

Selon une variante de réalisation préférée de l'invention, les pompes électromagnétiques agencées en dessous de la paroi horizontale inférieure pour faire circuler le sodium de la zone froide vers la zone chaude en traversant le coeur sont en outre agencées dans le supportage du coeur.

Avantageusement, les pompes électromagnétiques agencées dans le supportage du coeur sont en outre agencées sensiblement à l'aplomb des échangeurs intermédiaires.

Les inventeurs sont parvenus à la conclusion que les pompes électromagnétiques ou pompes rotodynamiques dépourvues de volute sont parfaitement adaptées pour fonctionner dans un milieu hostile et présentent l'avantage d'être compactes en diamètre et en hauteur. Elles répondent donc particulièrement au critère de minimisation de la taille des composants contenus dans la cuve du réacteur. De plus, ces types de moyen de pompage sont parfaitement adaptés à la variation du débit en faisant varier la fréquence électrique de leur alimentation.

Il va de soi qu'un même groupe de pompage peut comprendre une pluralité de pompes électromagnétiques et/ou pompes rotodynamiques dépourvues de volute et que celles-ci sont alors en parallèle hydraulique entre elles.

Aussi, grâce à l'invention le diamètre de cuve peut être réduit.

En effet, les moyens de pompage de l'art antérieur peuvent être déplacés et placés sous les échangeurs intermédiaires du fait de l'utilisation de pompes électromagnétiques.

Même si la largeur d'un sous ensemble constitué par un échangeur intermédiaire et une (des) pompe(s) électromagnétique(s) accolée(s) est azimutalement plus large qu'un échangeur intermédiaire seul, le fait de supprimer les pompes électromécaniques selon l'art antérieur et par voie de conséquence l'encombrement propre à ces pompes électromécaniques (arbres traversant la cuve depuis la dalle de fermeture) et l'espace les séparant permet de réduire le diamètre de cuve.

On peut grâce à l'invention placer les pompes électromagnétiques selon l'invention à l'aplomb en dessous de modules mixtes (échangeurs intermédiaires/pompes électromagnétiques ou pompes rotodynamiques dépourvues de volute du dessus) pour les raisons suivantes :

- la convection dans chaque échangeur intermédiaire n'est plus en convection naturelle par gravité mais en convection forcée par les pompes électromagnétiques dans la zone chaude, et l'entrée du sodium dans le faisceau de tube coté primaire de l'échangeur, n'est plus liée à la position altimétrique de ce dernier. Ainsi, dans le sous-ensemble de l'invention constitué par un échangeur intermédiaire et une pompe électromagnétique ou pompes rotodynamique en circuit fermé avec l'une de ses fenêtres d'entrée, l'entrée du sodium primaire peut être située avantageusement en bas du collecteur chaud, et grâce à la convection forcée, la fenêtre d'entrée du faisceau de tube de l'échangeur peut être située au-dessus du niveau libre. Un tel agencement permet de pouvoir remonter légèrement l'échangeur vers la dalle de fermeture de la cuve et ainsi de dégager de la place sous celui-ci pour placer les pompes électromagnétiques ou pompes rotodynamiques dépourvues de volute qui font circuler le sodium de la zone froide vers la zone chaude en fonctionnement normal,

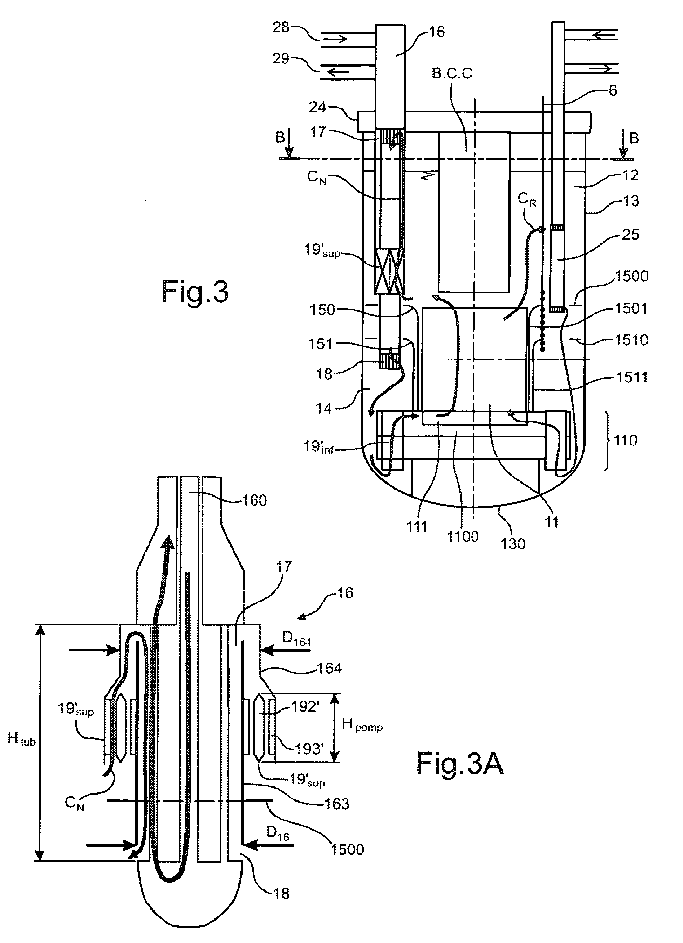

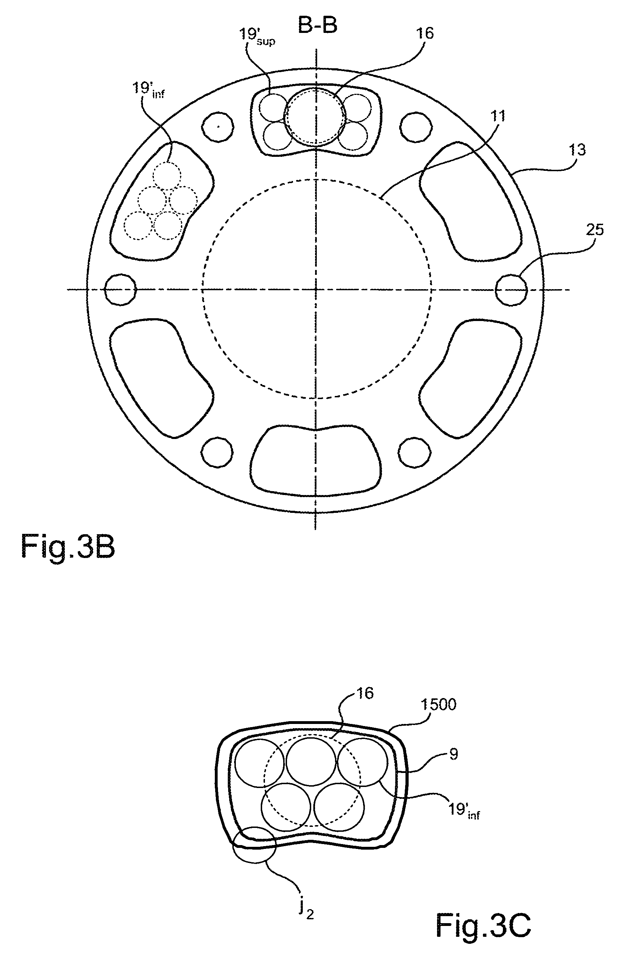

- du fait de la compacité des pompes électromagnétiques ou des pompes rotodynamiques dépourvues de volute, le choix du nombre de pompes et leur emplacement est fait de préférence de façon à choisir un agencement optimal. De manière préférée, un sous ensemble constitué par un certain nombre de pompes électromagnétiques agencées dans le supportage du coeur peut être inscrit dans une section à l'aplomb de celle délimitée par un sous-ensemble constitué par un seul échangeur intermédiaire et des pompes fixées et accolées à celui-ci. Ainsi dans le mode de réalisation illustré en figure 3B et comme expliqué par la suite, cinq pompes électromagnétiques du dessous identiques entre elles sont situées dans une section à l'aplomb d'une section délimitée par quatre pompes fixées accolées à un seul échangeur intermédiaire,

- un module mixte donné (échangeur intermédiaire/lot de pompes électromagnétiques du dessus) est légèrement moins large radialement que le diamètre d'un échangeur intermédiaire selon l'état de l'art.

Selon une caractéristique avantageuse, lorsque la section droite des pompes électromagnétiques du dessous est supérieure à la section droite d'un échangeur intermédiaire, ce dernier comprend alors deux collerettes transversales et séparées l'une de l'autre d'une distance qui correspond à la hauteur séparant les deux parties horizontales des parois, les collerettes étant agencées chacune en regard des dites parties horizontales en définissant les jeux entre échangeur intermédiaire et parois.

L'agencement des pompes électromagnétiques dans le supportage du coeur permet avantageusement de diriger le sodium primaire en sortie des dites pompes vers le pied des assemblages combustibles constituant le coeur. Ce pied présente des ouvertures destinées à alimenter en sodium les assemblages combustibles.

Selon une variante de réalisation avantageuse, les pompes électromagnétiques sont reliées en lot à un échangeur intermédiaire au moyen d'une liaison souple, la souplesse de cette liaison permettant à la fois de s'accommoder des dilatations différentielles entre l'échangeur intermédiaire et le lot de pompes électromagnétiques et de réaliser un montage ou un démontage simultané de l'échangeur intermédiaire et du lot de pompes électromagnétiques par effort de poussée ou de traction depuis le dessus extérieur à la dalle de fermeture de la cuve.

Les liaisons souples peuvent être en outre dimensionnées pour servir de logement aux câbles électriques d'alimentation des pompes électromagnétiques agencées dans le supportage du coeur.

Selon un mode de réalisation avantageux de l'invention, les moyens d'acquisition de température dans l'espace délimité par les deux parois sont constitués de thermocouples fixés sur une ou plusieurs perches à différents niveaux, la (les) perche(s) étant agencée(s) sensiblement verticalement et extractible(s) depuis le dessus extérieur à la dalle de fermeture de la cuve.

De préférence, les seconds échangeurs sont agencés avec jeux au moins dans des seconds ajours pratiqués dans la partie horizontale de la paroi supérieure du dispositif de séparation de manière à localiser leurs fenêtres de sortie en dessous de celle-ci.

De préférence encore, les fenêtres de sortie des seconds échangeurs sont agencées immédiatement en dessous de la partie horizontale de la paroi supérieure dans la hauteur la plus chaude de la stratification établie entre les deux parties horizontales.

De préférence également, des troisièmes ajours pratiqués dans la partie horizontale de la paroi inférieure sont agencés à l'aplomb des seconds ajours dans lesquels sont agencés individuellement les seconds échangeurs afin d'améliorer encore la convection naturelle du sodium primaire lorsque le coeur et les moyens de pompage sont à l'arrêt.

L'invention concerne également un module de convection thermique comprenant un échangeur de chaleur et au moins une pompe électromagnétique ou une pompe rotodynamique dépourvue de volute fixée en étant accolée dans le sens de sa hauteur à l'enveloppe extérieure dudit échangeur intermédiaire séparant les fenêtres d'entrée et de sortie et dans lequel un conduit relie directement la sortie de la pompe et l'une des fenêtres d'entrée.

Toutes les améliorations dans la conception d'un réacteur SFR de type intégré obtenues grâce à l'invention permettent d'optimiser l'utilisation de l'espace situé à l'intérieur du diamètre de la cuve et ainsi de réduire le diamètre de la cuve et par voie de conséquence de réduire les coûts d'investissement.

## BREVE DECSRIPTION DES DESSINS

D'autres avantages et caractéristiques de l'invention ressortiront mieux à la lecture de la description détaillée de l'invention faite en référence aux figures suivantes dans lesquelles :

- la figure 1 est une vue schématique en coupe longitudinale illustrant le principe de conception d'un réacteur SFR de type à boucles selon l'état de l'art,
- la figure 2 est une vue schématique en coupe longitudinale d'un réacteur SFR de type intégré illustrant son principe de conception selon l'état de l'art,
- la figure 2A est une vue schématique en coupe longitudinale d'un échangeur intermédiaire tel qu'agencé dans la figure 2 et illustrant son principe de fonctionnement selon l'état de l'art,
- la figure 2B est une vue schématique de dessus d'un réacteur SFR de type intégré selon la figure 2 et illustrant l'agencement de ses composants selon l'état de l'art,
- la figure 3 est une vue schématique en coupe longitudinale d'un réacteur SFR de type intégré illustrant son principe de conception selon l'invention,
- la figure 3A est une vue schématique en coupe longitudinale d'un module d'échangeur intermédiaire avec pompes électromagnétiques tel qu'agencé dans la figure 3 et illustrant son principe de fonctionnement selon l'invention,
- la figure 3B est une vue schématique de dessus d'un réacteur SFR de type intégré selon la figure 3 et illustrant l'agencement de ses composants selon l'invention dans la cuve,
- la figure 3C est une vue schématique du dessus d'une partie de la figure 3B et illustrant l'agencement relatif entre composants,
- la figure 4 est une vue schématique en perspective montrant une pompe électromagnétique concourant à la réalisation de l'invention,
- la figure 5 est une vue schématique en coupe longitudinale partielle d'un réacteur SFR de type intégré selon l'invention illustrant l'agencement relatif entre pompes électromagnétiques et échangeur intermédiaire,
- la figure 5A est une vue de détail de la figure 5 illustrant l'agencement d'une pompe électromagnétique pour faire circuler le sodium de la zone froide vers la zone chaude en traversant le coeur,
- la figure 6 est une vue schématique en coupe longitudinale partielle d'un réacteur SFR de type intégré selon l'invention illustrant l'agencement relatif entre échangeur dédié à l'évacuation de puissance résiduelle, moyens d'acquisition de température et dispositif de séparation entre zone chaude et zone froide selon l'invention,
- la figure 7 est une vue schématique en coupe longitudinale partielle d'un réacteur SFR de type intégré selon l'invention illustrant une variante d'agencement entre pompes électromagnétiques et échangeur intermédiaire,
- la figure 8 représente le schéma de principe de la chaîne de régulation du débit des pompes électromagnétiques selon l'invention,
- la figure 9 montre un mode de réalisation d'un réacteur SFR selon l'invention, qui est une alternative au mode de la figure 3,
- la figure 9A est une vue de détail de la figure 9,
- la figure 10 illustre le principe de fonctionnement d'une pompe rotodynamique pouvant être utilisées dans le cadre de l'invention,

- la figure 11 est une vue schématique en coupe longitudinale d'un module d'échangeur intermédiaire avec pompes rotodynamiques illustrant son principe de fonctionnement selon l'invention, qui est une alternative au module selon la figure 3A,
- les figures 11A et 11B sont des vues de détail de la figure 11.

## EXPOSÉ DÉTAILLÉ DE MODES DE RÉALISATION PARTICULIERS

Les figures 1 à 2B sont relatives respectivement à un réacteur SFR de type à boucles selon l'état de l'art et d'un réacteur SFR de type intégré selon l'état de l'art. Elles ont déjà été commentées ci-dessus et ne le sont donc pas ci-après.

Par souci de clarté les mêmes références désignent les mêmes composants communs à un réacteur SFR de type intégré selon l'art antérieur et illustré en figure 2 et à un réacteur SFR de type intégré selon l'invention.

Dans l'ensemble de la présente demande, les termes « horizontale », verticale », « inférieur », « supérieur », « dessous » et « dessus » sont à comprendre par référence à une cuve du réacteur agencée à la verticale et à l'agencement par rapport à la zone froide ou chaude. Ainsi, la paroi supérieure selon l'invention désigne la paroi la plus proche de la zone chaude, tandis que la paroi inférieure désigne celle la plus proche de la zone froide. De même, une pompe électromagnétique selon l'invention agencée au dessous de la paroi inférieure est celle la située dans la zone froide.

De même, dans l'ensemble de la présente demande, les termes « amont » et « aval » sont à comprendre par référence au sens de l'écoulement du sodium. Ainsi, un groupe de moyens de pompage en amont d'un échangeur intermédiaire est traversé d'abord par le sodium qui circule ensuite à travers l'échangeur intermédiaire. Un groupe de moyens de pompage en aval d'un échangeur intermédiaire est traversé par le sodium qui a au préalable traversé l'échangeur intermédiaire.

Sur la figure 3, on peut voir le schéma global d'un réacteur SFR de type intégré selon l'invention. Le réacteur intégré comprend un coeur 11 dans lequel la chaleur est dégagée suite aux réactions nucléaires. Ce coeur 11 est supporté par un supportage 110. Ce supportage 110 comprend un sommier 1100 dans lequel sont enfoncés les pieds des assemblages 111 constituants le coeur, ce sommier 1100 étant supporté par un platelage 1101 reposant sur le fond 130 de la cuve 13. Au-dessus du coeur se trouve le bouchon de contrôle du coeur (BCC) comprenant l'instrumentation nécessaire au contrôle et au bon fonctionnement des réactions nucléaires.

Le circuit d'évacuation de la chaleur suivi par le sodium primaire en fonctionnement normal du coeur 11 est schématiquement représenté par les flèches en traits pleins CN : à la sortie du coeur, le sodium débouche dans un collecteur chaud 12. Le collecteur chaud 12 est séparé du collecteur froid 14 en dessous, par un dispositif de séparation approprié 15.

Ce dispositif de séparation entre collecteurs (ou zones) chaud 12 et froid 14 est constitué de deux parois 150, 151 ajourées. Ces deux parois 150, 151 ajourées sont chacune avec une partie sensiblement verticale 1501, 1511 agencée en entourant le coeur et une partie sensiblement horizontale 1500, 1510. Les parties horizontales 1500, 1510 sont séparées d'une hauteur H. Dans les modes illustrés, elles sont reliées entre elles par un arrondi. Les parties verticales de chaque paroi 150, 151 sont fixées au supportage 110 du coeur 11. L'espace délimité au dessus de la partie horizontale 1500 de la paroi supérieure 150 forme la zone chaude tandis que l'espace délimité en dessous de la partie horizontale 1510 de la paroi inférieure 151 forme la zone froide.

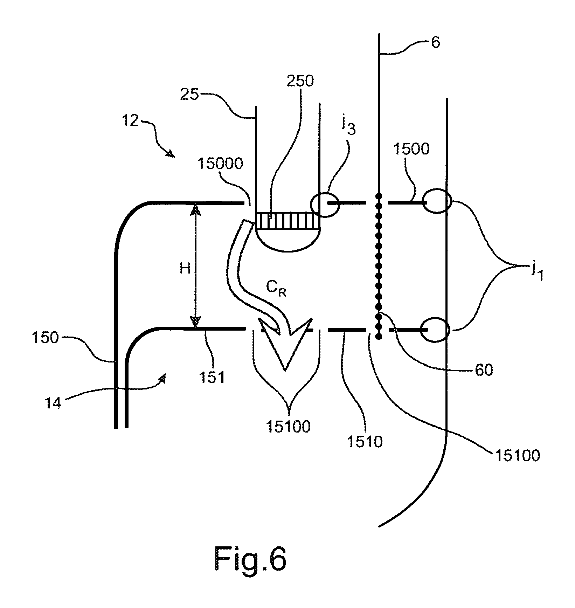

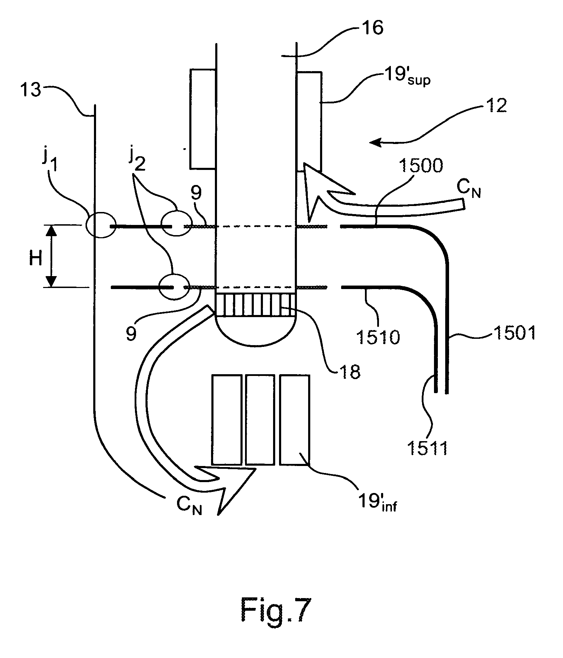

Comme montré en figures 6 et 7, les parties sensiblement horizontales 1500, 1510 sont agencées avec jeux j1 par rapport à la cuve 13.

Chaque échangeur intermédiaire 16 est disposé verticalement au travers de la dalle de fermeture 24. Le sodium primaire alimentant en fonctionnement normal les échangeurs intermédiaires 16 est pris dans le collecteur chaud 12 et est rejeté dans le collecteur froid 14. Les échangeurs intermédiaires 16 traversent les deux parties horizontales 150, 151 de paroi avec jeu fonctionnel j2 et sans aucune étanchéité particulière.

Des pompes électromagnétiques 19'sup sont disposées en circuit hydraulique fermé avec l'entrée des échangeurs intermédiaires 16 pour faire circuler par convection forcée le sodium dans ces échangeurs.

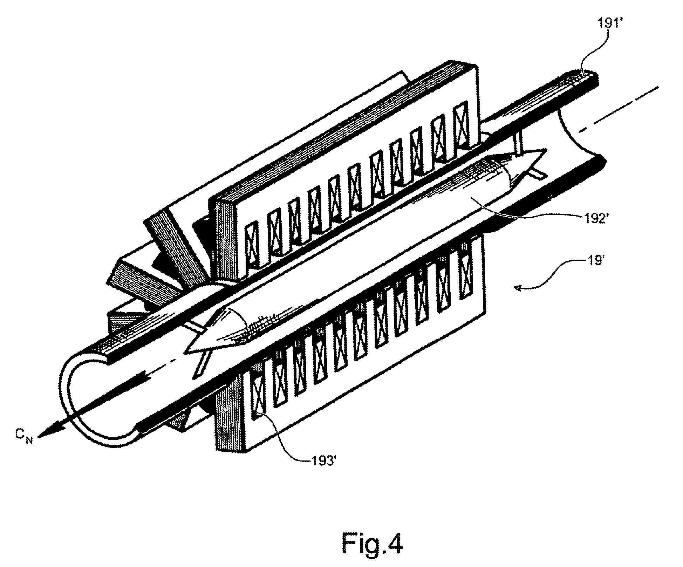

Un exemple de réalisation de pompe électromagnétique 19' convenant à l'invention aussi bien pour les pompes agencées au-dessus que celles agencée en dessous est représenté en figure 4. Une telle pompe 19' est constituée d'un canal annulaire 191' formant l'anneau sodium dans lequel est implanté un noyau feuilleté assurant la fermeture du circuit magnétique 192', entouré de bobines magnétiques 193' constituant le circuit magnétique extérieur. Une telle pompe 19' utilise les propriétés conductrices du sodium pour le pomper sans intervention de pièce mécanique en mouvement. Le principe est de créer un champ magnétique glissant le long d'un d'anneau sodium défini par 191' et 192'. Il se crée alors des courants induits dans l'anneau et avec le champ magnétique, il s'exerce sur le sodium des forces électromagnétiques dites forces de Laplace propulsant le sodium dans le canal annulaire selon le sens d'écoulement CN.

Dans le collecteur froid, les pompes électromagnétiques 19'inf aspirent le sodium pour le propulser dans le coeur 11.

Les dimensions d'encombrement des pompes électromagnétiques 19' sont faibles par rapport à des pompes électromécaniques selon l'état de l'art, à condition que le débit ne soit pas trop important, (inférieur au m3/s). A cette fin, on prévoit avantageusement, des structures appropriées placées justes en amont et en aval desdites pompes électromagnétiques 19'. Ces structures appropriées ont pour but de guider le sodium afin d'obtenir une alimentation correcte du canal annulaire avec un minimum de perte de charge.

La figure 3A présente la variante préférée du couplage en circuit hydraulique fermé entre un échangeur intermédiaire 16 et des pompes électromagnétiques 19'sup selon l'invention. Un tel couplage permet conformément à l'effet recherché par l'invention d'obtenir un écoulement CN du sodium primaire en convection forcée. La charge motrice est fournie par les pompes électromagnétiques 19'sup fixées accolées sur l'enveloppe extérieure de l'échangeur intermédiaire 16 qui sépare les fenêtres d'entrée 17 des fenêtres de sortie 18. Plus exactement, il est prévu un conduit annulaire d'alimentation du sodium 164 reliant la sortie du canal annulaire 191' des pompes électromagnétiques 19'sup aux fenêtres d'entrée 17 en réalisant ainsi un circuit fermé. Comme visible également sur la figure 3A, chaque pompe électromagnétique 19'sup est agencée légèrement au-dessus de la partie horizontale 1500 de la paroi supérieure 150. Le sodium est aspiré par les pompes 19'sup, puis est envoyé vers l'entrée 17 par le conduit annulaire d'alimentation 164. En partie supérieure, le sodium entre dans les fenêtres d'entrée 17 comme pour un échangeur de conception standard.

Les avantages d'une telle architecture modulaire (échangeur intermédiaire 16 + pompes électromagnétiques 19'sup fixées accolées autour) avec convection forcée du sodium primaire sont :

- d'améliorer légèrement le coefficient d'échange global de l'échangeur,
- de réduire le pas entre les tubes 162 du primaire car la perte de charge n'est plus contrainte par la charge motrice gravitaire comme dans un échangeur intermédiaire dans un réacteur SFR selon l'état de l'art,
- à surface d'échange donnée, de réduire le nombre de tubes en augmentant leur longueur, car l'aspiration du sodium est toujours immergée dans le collecteur chaud (aspiration par les pompes 19'sup), mais la fenêtre d'entrée 17 de l'échangeur intermédiaire 16 peut être agencée au-dessus du niveau libre 20 du collecteur chaud 12 du fait de la propulsion vers le haut du sodium primaire.

On peut ainsi réduire l'encombrement radial d'un échangeur intermédiaire 16.

L'agencement d'un module mixte 16, 19'sup selon le mode de réalisation de la figure 3B est préféré : un nombre de quatre pompes électromagnétiques 19'sup identiques et placées deux à deux sur un côté diamétralement opposé d'un échangeur intermédiaire 16 donné.

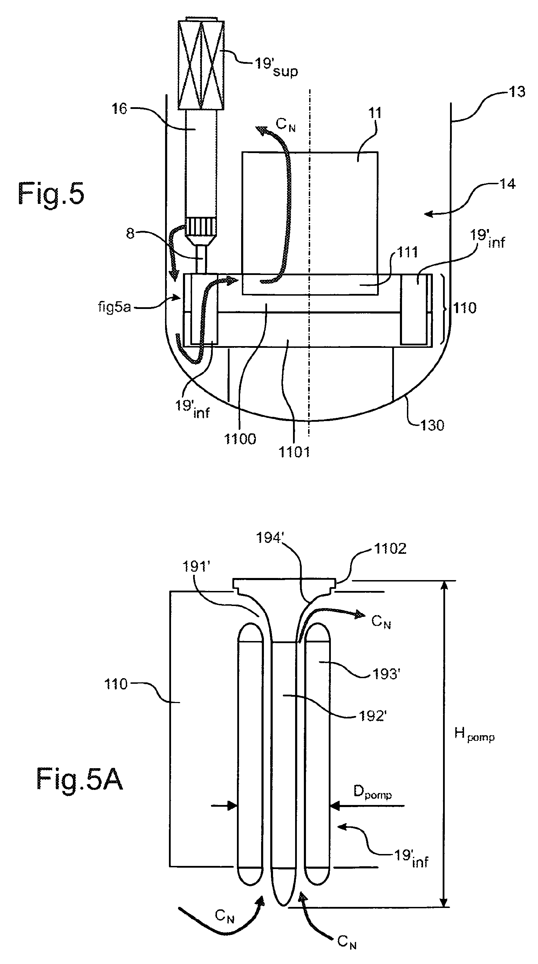

Les figures 5 et 5A représentent respectivement une variante préférée d'agencement des pompes électromagnétiques 19'inf servant à diriger le sodium primaire depuis le collecteur froid 14 vers le coeur 11 d'une part par rapport à un module mixte échangeur intermédiaire 16/pompes électromagnétiques 19'sup et d'autre part par rapport au supportage 110 du coeur 11 .

Le coeur 11 est refroidi par le sodium le traversant. L'utilisation de pompes électromagnétiques 19' permet de réduire considérablement la hauteur des moyens de pompage et de placer celles 19'inf faisant circuler le sodium primaire de la zone froide vers le coeur 11 à l'aplomb en dessous des échangeurs intermédiaires 16. Ainsi, sous chaque module mixte échangeur intermédiaire 16/19'sup est placé un lot d'une ou plusieurs pompes électromagnétiques 19'inf permettant de faire circuler le sodium primaire dans le coeur 11 . Le nombre de pompes 19'inf constituant ce lot sera dépendant de l'architecture du réacteur. Dans la variante illustrée aux figures 3B et 3C, un nombre de cinq pompes électromagnétiques inférieures 19'inf sont à l'aplomb d'un module comprenant un échangeur intermédiaire 16 et quatre pompes électromagnétiques supérieures 19'sup accolées deux à deux sur un côté diamétralement opposé de l'échangeur intermédiaire 16.

Sur les figures 5 et 5A, les pompes électromagnétiques 19'inf sont posées sur les structures dites sommier 1100 et platelage 1101 servant au supportage 110 du coeur 11.

L'écoulement du sodium primaire CN dans l'espace annulaire des pompes électromagnétiques inférieures 19'inf est vertical et dirigé vers le haut. Il en résulte un effort de contre réaction de la PEM dirigé vers le bas, favorisant l'appui de la PEM sur son supportage 110 grâce à un épaulement 1102 situé sur le déflecteur de sortie 194'. Le déflecteur de sortie 194' dirige ainsi le sodium vers le pied des assemblages 111 constituant le coeur 11.

Un lot de pompes électromagnétiques inférieures 19'inf est relié avantageusement à un module mixte comprenant un échangeur intermédiaire 16 et au moins une pompe électromagnétique supérieure 19'sup par une liaison mécanique souple 8. Les fonctions de cette liaison 8 sont de :

- permettre un montage et démontage des pompes électromagnétiques inférieures 19'inf en même temps que le montage et démontage des modules mixtes échangeurs intermédiaires 16/pompes électromagnétiques supérieures 19' sup, en soulevant ou en poussant l'ensemble depuis l'extérieur de la dalle 24 de la cuve 13,

- permettre de s'accommoder des dilatations différentielles entre un module 16, 19'sup et les pompes électromagnétiques inférieures 19'inf à l'aplomb en dessous,

- de servir de guide aux câbles électriques nécessaires à l'alimentation des pompes électromagnétiques inférieures 19'inf.

Le tableau ci-dessous donne les ordres de grandeurs d'un exemple de réalisation possible :

|  | Unités | Symboles (en figure 5A) | Valeurs |
|---|---|---|---|
| Puissance du réacteur | MW |  | 3600 |
| Nombre de module mixte 16/19'sup |  |  | 6 |
| Nombre de pompes électromagnétiques inférieure 19'inf par module mixte 16/19' |  |  | 5 |
| Débit à travers le coeur 11 | m3/s |  | 22,54 |
| Débit par pompe électromagnétique inférieure 19'inf | m3/s |  | 0, 75 |
| Perte de charge du coeur 11 | bar |  | 5,4 |
| Longueur d'une pompe 19'inf * | m | Hpomp | 3,4 |
| Diamètre d'une PEM | m | Dpomp | 0, 90 |
| * : Longueur de la pompe électromagnétique 19'inf correspond approximativement à la longueur des bobinages, des masses magnétiques et des structures et ou déflecteur pour guider le sodium juste en amont et aval du conduit annulaire 191'. | | | |

La figure 6 présente un mode de réalisation optimisé pour améliorer l'efficacité de la stratification thermique dans l'espace de hauteur H séparant les deux parties horizontales 1500, 1510 des parois supérieures et inférieure 150, 151 et ainsi d'améliorer la convection naturelle Cr (circulation résiduelle) du sodium primaire en fonctionnement d'arrêt des réactions nucléaires. Un ajour 15000 est prévu dans la partie horizontale 1500 de la paroi supérieure 150 sous chaque échangeur. La zone d'échange des échangeurs 25 dédiés à l'évacuation de puissance résiduelle est entièrement placée dans le collecteur chaud. La fenêtre de sortie 250 est positionnée juste en dessous de la partie horizontale 1500 de la paroi supérieure 150. Un jeu fonctionnel j3 entre l'ajour 15000 de la paroi supérieure 150 et l'échangeur 25 permet le déplacement différentiel entre ces composants.

Les avantages de cet agencement sont en mode de fonctionnement d'évacuation de la puissance résiduelle du coeur 11 (à l'arrêt ainsi que les pompes électromagnétiques 19'), sont les suivants :

- la fenêtre de sortie 250 de l'échangeur secondaire 25 étant placée juste sous la partie horizontale 1500 de la paroi supérieure 150, le sodium froid sortant de cet échangeur 25 en fonctionnement descend plus facilement vers le collecteur froid 14 puisque une des parois 150 est déjà franchie, et ceci sans se mélanger avec le sodium du collecteur chaud 12, en d'autres termes, le chemin hydraulique lors du fonctionnement à l'arrêt en convection naturelle est amélioré,

- le sodium traverse la partie horizontale 1510 de la paroi inférieure 151 via des ajours 15100 aménagés sous l'échangeur dédié à l'évacuation de puissance résiduelle et à via les trous constitués par les jeux fonctionnels entre paroi inférieure et les échangeurs intermédiaires et le jeu fonctionnel entre paroi du redan et cuve du réacteur.

La Figure 7 représente une variante avantageuse de réalisation d'un module mixte échangeur intermédiaire 16/pompes électromagnétiques 19'sup et son agencement par rapport un lot de pompes électromagnétiques inférieures 19'inf.

La hauteur H de l'espace entre parties horizontales 1500, 1510 des deux parois 150, 151 est relativement importante (de l'ordre de deux mètres) pour permettre une stratification correcte. La distance entre les parties verticales 1501, 1511 des deux parois est faible (de l'ordre de quelques centimètres).

L'espace de hauteur H est en communication avec le collecteur chaud 12 et le collecteur froid 14 par les jeux fonctionnels suivants:

- j1 défini entre les parties horizontales 1500, 1501 des deux parois et la cuve 13. Ce jeu fonctionnel j1 est de l'ordre de quelques centimètres et permet de reprendre les déplacements différentiels entre les composants (parois 150, 151 et cuve 13),
- j2 défini au niveau des traversées entre modules mixtes échangeurs intermédiaires 16/pompes électromagnétiques supérieures 19'sup et parois 150, 151. Ce jeu fonctionnel j2 est de l'ordre de quelques centimètres et permet de reprendre les déplacements différentiels entre les composants (parois 150, 151 et échangeurs intermédiaires 16),
- j3 défini au niveau des traversées entre échangeurs 25 dédiés à l'évacuation de la puissance résiduelle et la partie horizontale 1500 de la paroi supérieure 150. Comme dit précédemment, afin que le sodium sortant de ces échangeurs 25 rejoignent facilement le collecteur froid 14, des ajours supplémentaires 15100 sont aménagés à l'aplomb dans la partie horizontale 1510 de la paroi inférieure.

Pour dimensionner précisément le dispositif de séparation dans une configuration donnée, l'homme du métier veillera à faire en sorte que les espaces de communication ne présentent pas de sections de passage trop importantes avec un grand diamètre hydraulique afin de réaliser une séparation physique efficace. L'objectif des parois est en effet de marquer une limite physique entre des zones 12, 14 où les écoulements sont à fortes vitesses : collecteur chaud 12 et collecteur froid 14, avec une zone calme où doit s'établir une stratification thermique sans qu'il y ait aucune nécessité d'avoir une étanchéité. En fonction de l'application de l'invention, des aménagements spécifiques peuvent être réalisés. Quoi qu'il en soit, les jeux fonctionnels j1, j2 et j3 et la hauteur H entre les parties horizontales 1500, 1510 des deux parois du dispositif de séparation sont préalablement déterminés pour, en fonctionnement normal, reprendre les déplacements différentiels entre les parois 150, 151, échangeurs 16, 25 et cuve 13 et pour permettre d'établir en fonctionnement normal une stratification thermique du sodium primaire dans l'espace délimité entre les parties horizontales des deux parois 150, 151 et pour, en cas d'arrêt inopiné d'un seul groupe de pompage 19', limiter les efforts mécaniques subis par les parois dus à la partie du débit de sodium primaire passant dans lesdits jeux.

La stratification thermique ainsi déterminée consiste ainsi en quelque sorte à prévoir un volume suffisamment important sur la hauteur entre les deux parois 150, 151 et à limiter les débits parasites de sodium primaire entre zone chaude 12 et zone froide 14.

A titre indicatif, on donne ici un ordre de grandeur de la section de passage entre parois et collecteurs 12, 14, dans les mêmes conditions que celles données dans les tableaux précédents. Pour cette évaluation, les jeux fonctionnels au niveau des communications j1, j2 et j3 sont estimés à environ 5cm :

- jeu fonctionnel j1 entre cuve 13 et parties de paroi 1500, 1510: avec une cuve de diamètre 14 à 15 m, la section totale est de 2,3 m$^2$,
- jeu fonctionnel j2 entre échangeur intermédiaire 16 et parties de paroi 1500, 1510 : avec un nombre de six échangeurs 16 avec des pompes électromagnétiques inférieurs 19'inf qui requièrent une section de passage correspondant environ à un rectangle de 2 x 3 m, la section est de 3 m$^2$,
- jeu fonctionnel j3 entre échangeur d'évacuation de puissance résiduelle 25 et partie horizontale 1500 de la paroi supérieure 150: avec un nombre de six échangeurs 25 d'un mètre de diamètre environ, la section est d'~1 m$^2$.

La section totale de passage de la partie horizontale de la paroi supérieure est environ de 6 m$^2$. Cette estimation totale est valable pour la paroi supérieure 150. La paroi inférieure 151 n'étant pas traversée par les échangeurs 25 dédiés à l'évacuation de la puissance résiduelle, seuls les ajours 15100 sont réalisés dans la partie horizontale 1510 de cette paroi. Ces ajours 15100 ont de préférence un diamètre hydraulique équivalent aux autres ajours, soit un diamètre d'environ 0,10 m. Le nombre de ces ajours 15100 est de préférence tel que leur section totale soit au moins égale (en ordre de grandeur) à la section totale créée par le jeu fonctionnel j3 autour des échangeurs 25 d'évacuation de puissance résiduelle. Dans le mode de réalisation illustré, cette section étant de l'ordre de 1m$^2$, il y aura au minimum une vingtaine d'ajours 15100 sous chaque échangeur 25 dédié à l'évacuation de puissance résiduelle.

Quoi qu'il en soit, la section de passage à travers les parois ajourées 150, 151 est en ordre de grandeur, satisfaisante pour toutes les conditions différentes de fonctionnement suivantes :

o elle doit être suffisamment grande pour que les parois 150, 151 ne subissent pas d'effort mécanique trop important en cas d'arrêt total inopiné d'un groupe de pompe 19'. En effet, pour un réacteur d'une puissance nominale de l'ordre de 3600MW, le débit de sodium en fonctionnement normal est de l'ordre environ de 22,5 m$^3$/s. Ainsi par exemple, en cas d'arrêt inopiné du groupe de pompes 19'sup alimentant les échangeurs intermédiaires 16, une partie du débit sodium continue à circuler dans les échangeurs intermédiaires 16 et l'autre partie à travers les jeux j1, j2, j3 entre composants 16, 25, 13 et parois 150, 151. La répartition entre les deux débits est fonction des pertes de charges relatives entre les échangeurs intermédiaires 16 et les deux parois 150, 151. Une estimation de ces pertes de charge conduit potentiellement à environ 70% du débit passant par les jeux j1, j2, j3 soit environ 16 m$^3$/s. La vitesse moyenne entre les ajours des parois 150, 151 et les composants est donc de 2,7m/s. Cette vitesse est faible et ne conduit pas à des efforts mécaniques importants sur les parois 150, 151,

o elle est suffisamment grande pour ne pas casser la stratification thermique, c'est-à-dire conserver un profil de température vertical et des températures la plus élevée et la moins élevée qui puissent toujours être corrigé en fonctionnement normal par asservissement des pompes et maintenu en fonctionnement d'arrêt,

o en fonctionnement normal, pour limiter les débits parasites au travers les trous, le diamètre hydraulique doit être faible. Les sections de passage dans les parois 150, 151 sont de préférence de forme très allongée avec une largeur d'environ 5 cm. Dans ce cas, le diamètre hydraulique est sensiblement égal à deux fois la largeur soit 10 cm. Un tel diamètre rapporté au diamètre d'une cuve d'un réacteur selon l'invention qui pourra être de l'ordre d'environ 15 m, la valeur relative du diamètre hydraulique est donc de 0,1/15 soit moins de 0,7 %.

Une évaluation comparative entre deux réacteurs SFR de type intégré chacun d'une puissance nominale de 3600 MW thermiques et comprenant chacun un nombre six échangeurs intermédiaires 16 : le réacteur R1 selon l'état de l'art comprend les échangeurs intermédiaires 16 selon les figures 2 à 2B tandis que le réacteur selon l'invention R2 comprend les échangeurs intermédiaires 16 selon les figures 3 à 3C.

Le tableau suivant synthétise cette évaluation comparative.

| | Unités | Symboles (Figures 3 et 3A) | R1 | R2 |
|---|---|---|---|---|
| Puissance unitaire | MW | | 600 | |
| Températures primaires | °C | | 548 / 398 | |
| Températures secondaires | °C | | 525 / 345 | |
| Débit sodium primaire par module 16 ou mixte 16/19'sup | m3/s | | 3,76 | |
| Diamètre extérieur des tubes 162 | mm | | 17,1 | |
| Epaisseur des tubes 162 | mm | | 0,8 | |
| Nombre de tubes 162 | | | 5022 | 3000 |
| Longueur des tubes 162 | m | $H_{tub}$ | 8,3 | 10,3 |
| Pas relatif du faisceau (pas/diamètre extérieur) | | | 1, 59 | 1,4 |
| Coefficient d'échange global | $W/m^2{}°C$ | | 38200 | 48000 |
| Surface d'échange rapportée au diamètre extérieur | $m^2$ | | 2230 | 1660 |
| Diamètre extérieur de l'échangeur intermédiaire 16 | m | $D_{16}$ | 2,40 | 1,75 |
| Densité volumique de puissance du faisceau de tubes 162 | $MW/m^3$ | | 19,5 | 34 |
| Diamètre extérieur du conduit d'alimentation 164 de l'échangeur intermédiaire 16 | m | $D_{164}$ | | 1,96 |
| Diamètre extérieur d'une pompe électromagnétique 19'sup | m | | | 1,03 |
| Hauteur des pompes électromagnétiques 19' sup* | m | Hpomp | | 1,6 |
| Ordre de grandeur de perte de charge de l'échangeur intermédiaire ou module 16 | bar | | 0,17 | 1 |
| * la hauteur Hpomp correspond approximativement à la hauteur des bobinages, des masses magnétiques et des structures pour guider le sodium juste en amont et aval du conduit annulaire 164 de la pompe 19'sup. | | | | |

La figure 3C et la figure 7 illustrent en outre un mode de réalisation optimisé dans le cas où la section droite du lot des pompes électromagnétiques inférieures 19'inf est plus grande que celle de l'échangeur intermédiaire 16. Ce mode permet d'obtenir une traversée des parois 150, 151 par l'échangeur intermédiaire 16 avec un diamètre hydraulique raisonnable. Pour faire face au cas où des vitesses d'écoulement du sodium dans le collecteur chaud 12 (ou le collecteur froid 14) induiraient des vitesses élevées (pouvant éventuellement casser la stratification) à travers l'espace libre au niveau de la section de passage entre l'échangeur intermédiaire 16 et les parois 150, 151, une collerette 9 est fixée sur l'échangeur intermédiaire 16.

La forme des ajours des parties horizontales 1500, 1510 des parois 150, 151 doit être légèrement supérieure à la section droite du lot des pompes électromagnétiques 19'inf pour permettre lors du montage/démontage leur passage à travers. Lorsque ces ajours sont trop importants, on implante des collerettes 9 afin de réduire le jeu comme pour obtenir le jeu fonctionnel j2 décrit ci-dessus.

Ces deux collerettes 9 sont ainsi fixées sur la virole extérieure de l'échangeur 16 et sont agencées à une hauteur telle qu'elles se situent chacune en regard d'une des parties horizontales 1500, 1510 d'une des parois 150, 151. La section de ces collerettes 9 définit avec les ajours des parties horizontales 1500, 1510 des parois 150, 151 les jeux fonctionnels j2 qui pour permettre le déplacement différentiel entre composants 16, 150, 151 suite aux dilatations thermiques subies. Là encore, un jeu fonctionnel j2 de quelques centimètres est nécessaire.

Ces collerettes 9 ont pour fonction d'éviter de laisser une ouverture trop importante entre une zone à forte vitesse d'écoulement (le collecteur chaud 12 ou froid 14) et une zone à faible vitesse (l'espace délimité entre parties horizontales 1500, 1510 et de hauteur H). Le jeu des collerettes 9 avec les ajours est donc déterminé pour être de l'ordre du jeu j2 fonctionnel ci-dessus.

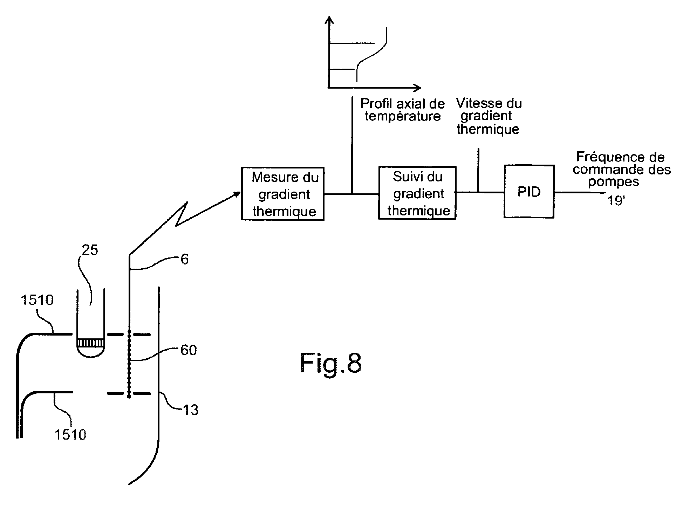

La figure 8 présente un mode de réalisation optimisé pour mesurer le gradient thermique dans l'espace interne entre parties horizontales 1500, 1510 de paroi 150, 151. Les moyens d'acquisition de température représentés sont constitué ici d'une ou plusieurs perches 6 immergée(s) dans le sodium et traversant les deux parties horizontales 1500, 1510 des deux parois 150, 151. Sur cette (ces) perche (s) 6 sont disposés des thermocouples 60 destinés à connaître la température du sodium à différentes altitudes dans la zone interne de hauteur H entre parois 150, 151. La connaissance du profil vertical de température associée à un traitement numérique, permet de suivre l'évolution du gradient thermique et d'asservir le débit d'un groupe de pompe 19'sup ou 19'inf au débit de l'autre 19'inf ou 19'sup.

En fonctionnement normal, le débit dans les pompes électromagnétiques supérieures 19'sup et le débit dans les pompes électromagnétiques inférieures 19'inf sont réglés pour être identiques. Dans ces conditions, la zone de hauteur H entre les deux parois 150, 151, constitue une zone sans écoulement ou avec des écoulements à faible vitesse permettant l'établissement d'une stratification thermique.

C'est cette stratification thermique qui fait office de séparation entre les deux collecteurs chaud 12 et froid 14.

La mesure de cette stratification thermique par les thermocouples ou sondes thermiques 60 fixées à différentes altitudes à la (aux) perche(s) ou par un autre procédé, permet en cas échéant d'ajuster le débit relatif entre groupe de pompes 19'inf et 19'sup.

L'efficacité de la stratification thermique peut être évaluée par le nombre de Richardson défini par l'équation suivante :

$$Ri = g\ (\Delta\rho/\ \rho)\ H\ /\ V^2$$

Où :

- g est l'accélération de la pesanteur (9.81 m$^2$/s) ;

- $\Delta\rho/\ \rho$ est la variation relative de densité ;

- $\Delta\rho = \rho$ froid - $\rho$ chaud

- $\rho$ froid est la masse volumique du fluide froid ;

- $\rho$ chaud est la masse volumique du fluide chaud ;

- $\rho$ est la masse volumique moyenne des fluides ;

- H est une dimension caractéristique du volume, typiquement la hauteur du volume,

- V est la vitesse d'arrivée du fluide dans le volume.

Le nombre de Richardson Ri caractérise ainsi le rapport entre les forces de densité ou gravitationnelles ($\Delta\rho$ g H) avec les forces d'inertie (p $V^2$). Si les forces d'inertie sont plus importantes que les forces gravitationnelles, Ri sera inférieur à l'unité et la convection forcée l'emporte, il n'y a pas de stratification. Si les forces gravitationnelles sont plus importantes que les forces d'inertie, Ri sera supérieur à l'unité, ce qui signifie qu'il y a une stratification qui s'établit à l'intérieur du volume.

Dans un volume comprenant des entrées et des sorties de liquide chaud et froid, on considère qu'il y a stratification si le nombre adimensionnel de Richardson est supérieur à l'unité.

Dans le cas particulier étudié, le volume à considérer est l'espace de hauteur H situé entre les deux parties horizontales 1500, 1510 des parois 150, 151. Puisqu'en fonctionnement normal, les débits des pompes électromagnétiques inférieures 19'inf et supérieures 19'sup sont égaux, il n'y a pas de débit dans cet espace de hauteur H, donc les vitesses sont nulles. En réalité, il peut y avoir de faible débit car les deux parois étant ajourées par l'intermédiaire des jeux fonctionnels j1, j2, j3, il apparaît de faibles vitesses d'écoulement à travers lesdits jeux.

Evaluation du nombre de Richardson Ri dans un réacteur R2 selon l'invention:

Puissance du réacteur : 3600 MW
Température entrée coeur (température froide) : ~ 390°C
Température sortie coeur (température chaude) : ~ 540°C
Débit nominal sodium~ 22,5 m$^3$/s
Masse volumique du Na chaud : ~ 821 kg/m$^3$
Masse volumique du Na froid : ~ 857 kg/m$^3$
Variation relative de densité : ~ 4,3%
Accélération de la pesanteur: 9,81 m/s$^2$
Dimension relative du volume (correspondant à la hauteur H entre les deux parois 150, 151) : ~ 2 m
Section de passage dans les parois 150, 151 dues à la présence des jeux j1, j2, j3 : ~ 6 m$^2$

Si on estime un déséquilibre important de débit temporaire de 10% entre les deux groupes de pompes 19'sup et 19'inf, ceci signifie qu'il ya potentiellement un débit de 10% du débit nominal qui passent par les jeux fonctionnels j1, j2, j3 soit environ 2,25 m$^3$/s.

Avec une section d'environ 6 m$^2$, la vitesse est donc environ égale à 0,37 m/s.

Dans ces conditions, le nombre de Richardson Ri est de sensiblement égal à 6. Ce nombre étant supérieur à l'unité, l'écoulement dans l'espace entre parois 150, 151 de hauteur H est bien stratifié. La mesure du niveau de cette stratification permet donc de réajuster les débits relatifs entre les deux groupes de pompes 19'inf et 19'sup par une régulation appropriée.

La figure 8 représente un mode de régulation de débit à l'aide d'une chaîne de régulation appropriée. La chaîne de régulation comprend la perche 6 sur laquelle sont fixés les thermocouples 60 afin de mesurer les températures à différentes altitudes dans l'espace de hauteur H. Les thermocouples 60 sont reliés à un système d'analyse du gradient thermique pour connaître l'évolution de ce gradient et déterminer la vitesse de montée ou descente de ce gradient. Ce système d'analyse est relié à une régulation PID, c'est-à-dire « Proportionnelle Intégrale et Dérivée » qui détermine la fréquence électrique de l'alimentation électrique d'un groupe de pompes donné 19', par exemple les pompes supérieures 19'sup si le débit des échangeurs thermiques intermédiaires 16 est asservi pour être égal au débit du sodium parcourant le coeur 11.

L'analyse de ce profil des températures et son suivi dans le temps permettent de connaître l'écart de débit entre les deux groupes de pompes.

Si le profil de température est stable, cela signifie que les débits des groupes sont identiques, ce qui est un fonctionnement satisfaisant.

Si le profil de températures se déplace vers le haut ou vers le bas il y a un écart de débit entre les deux groupes de pompes. Ainsi si la vitesse de déplacement du profil est 0,01 m/s, l'écart de débit est obtenu en multipliant cette vitesse par la section de l'espace interne redan. Pour un réacteur de 3600 MW, dont le diamètre de cuve est d'environ 15 m, cette section est d'environ 110 m$^2$. Pour l'exemple considéré, l'écart de débit est de 1,1 m$^3$/s soit environ 5% du débit nominal. Dans ce cas, le point de fonctionnement n'est pas considéré comme satisfaisant et donc, la régulation intervient sur les pompes asservies pour rééquilibrer le débit et ramener ainsi le gradient thermique vers le milieu de la hauteur entre les parties de paroi horizontales 1500 et 1510.

Un réacteur SFR de type intégré selon le projet EFR à l'étude (représenté en figure 2) présente un diamètre de la cuve de l'ordre de 17 m.

Avec l'invention proposée, il est possible d'atteindre un diamètre de cuve 13 de l'ordre de 14,5 m, soit une diminution de 15% du diamètre de la cuve par rapport à l'état de l'art.

La réduction du diamètre de cuve 13 grâce à l'invention a été rendue possible par la suppression sur la circonférence où sont placés les composants de l'emplacement de trois pompes primaires électromécaniques. Les moyens de pompage ont selon l'invention pu être déplacés et placés sous les échangeurs intermédiaires 16 du fait de l'utilisation de pompes électromagnétiques 19'. Même si la largeur d'un module mixte selon l'invention (échangeur intermédiaire 16/pompes électromagnétiques 19'sup) est azimutalement légèrement plus large qu'un échangeur intermédiaire 16 seul, le fait de supprimer les trois pompes électromécaniques selon l'état de l'art et l'espace les séparant des autres composants (échangeurs 16 et 25) permet de réduire le diamètre de cuve.

La possibilité de placer les pompes électromagnétiques 19'inf selon l'invention à l'aplomb en dessous des modules mixtes échangeurs intermédiaires 16/pompes électromagnétiques 19'sup est due aux raisons suivantes:

o la convection dans l'échangeur n'est plus en conversion naturelle par gravité, mais en convection forcée par des pompes, et l'entrée du sodium dans le faisceau de tube coté primaire, n'est plus liée à la position altimétrique de l'échangeur intermédiaire. Dans une conception standard, la fenêtre d'entrée est obligatoirement sous le niveau libre du sodium du collecteur chaud. Dans le cas du module mixte (échangeur intermédiaire 16/pompes électromagnétiques 19'sup), l'entrée sodium est située en bas du collecteur chaud, et grâce à la convection forcée, la fenêtre d'entrée du faisceau de tube peut être située au-dessus du niveau libre, ce qui revient à monter légèrement l'échangeur et à dégager de la place sous celui-ci pour placer les pompes.

o les pompes électromagnétiques 19' sont des pompes compactes en diamètre et en hauteur : on peut ainsi choisir un agencement optimal (figure 3B) ;

o un module mixte (échangeur intermédiaire 16/pompes électromagnétiques 19'sup) est légèrement moins large que le diamètre d'un échangeur intermédiaire 16 selon l'art antérieur. A titre d'exemple, un diamètre d'un échangeur intermédiaire 16 selon l'état de l'art (figure 2A) est de l'ordre de 2,4 m, tandis que l'encombrement radial d'un module mixte 16/19' est de l'ordre de 1,96 m.

o la suppression de partie cylindrique verticale 15b du redan des réacteurs SFR de type intégré selon l'art antérieur.

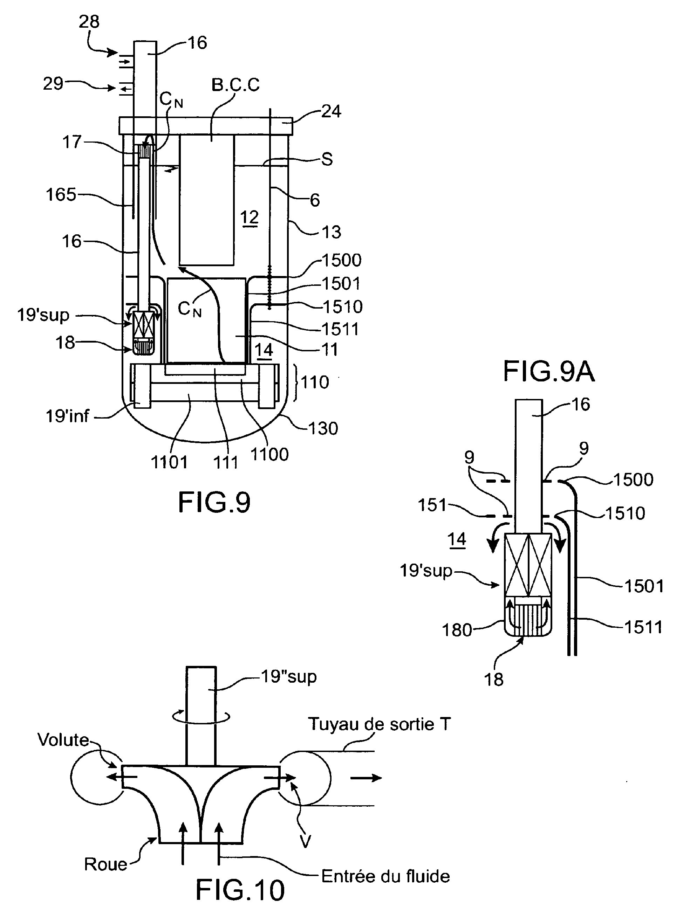

Dans un mode particulier de réalisation tel qu'illustré en figures 9 et 9A, il est possible de placer les pompes 19'sup des échangeurs intermédiaires 16, non plus en amont des échangeurs comme cela est décrit en référence avec la figure 3, mais en aval des échangeurs intermédiaires 16. Ceci présente pour avantage de faire fonctionner les pompes électromagnétiques dans un environnement de sodium de température moins élevée, correspondant à la température du collecteur froid 14 au lieu de celle du collecteur chaud 12 pour le mode de réalisation de la figure 3.

Sur les figures 9 et 9A, on voit que le sodium traverse l'échangeur intermédiaire 16 grâce à la pompe électromagnétique supérieure 19'sup qui est placée en sortie 18 de l'échangeur 16. Le sodium pénètre dans l'échangeur à l'aide d'une jupe d'alimentation 165 placée autour de l'échangeur 16. Cette jupe 165 permet de canaliser le sodium pris dans le collecteur chaud 12 vers la fenêtre d'entrée 17 de l'échangeur intermédiaire 16. Cette jupe 165 est étanche dans la partie supérieure, si la fenêtre d'entrée du sodium est au-dessus de la surface libre S du collecteur chaud 12. En sortie 18 de l'échangeur intermédiaire 16, une jupe 180 autour de la fenêtre de sortie 18 canalise le sodium sortant de la fenêtre 180 vers l'entrée de la pompe (des pompes) électromagnétiques 19'sup. La sortie des pompes électromagnétiques s'effectue dans le collecteur froid 14 sous la paroi inférieure 151, 1510, 1511 du redan. La pompe électromagnétique 19'sup étant plus large que l'échangeur 16, les parois du redan comporte un trou de passage plus grand au niveau de la traversée de l'échangeur pour introduire l'échangeur et ses pompes. Afin de réduire la section hydraulique de passage entre la zone du redan et des collecteurs chaud et froid, deux collerettes 9 sont fixées sur l'échangeur intermédiaire 16, chacune étant agencée au même niveau que l'une des parties horizontales 1500, 1510 des parois 150, 151 constituant le redan. La section de ces collerettes 9 correspond approximativement à la section droite des pompes électromagnétiques situées en aval des échangeurs intermédiaires 16, que ce soit celles 19'sup accolées aux échangeurs 16 ou les pompes 19'inf alimentant le coeur 11.

Selon un mode particulier de l'invention, on utilise des pompes rotodynamiques 19" sup dépourvues de volute en tant que moyens de pompage du sodium traversant les échangeurs intermédiaires 16. Les pompes rotodynamiques sont particulièrement intéressantes lorsqu'elles sont placées en sortie 18 de l'échangeur 16 et qu'elles refoulent le caloporteur non pas dans un conduit mais dans un volume 14. En effet, le fait de rejeter le fluide dans un volume permet de supprimer la volute usuellement dans ce type de pompes qui sert à collecter le fluide en pression et à le canaliser vers une tuyauterie. La suppression de cette volute réduit le diamètre d'encombrement de la pompe rotodynamique et le rend comparable à celui des pompes électromagnétiques, ce qui permet de garder la compacité du réacteur nucléaire SFR. Le principe de fonctionnement d'une pompe rotodynamique 19"sup standard est illustré en figure 10 : il s'agit d'une pompe dont le gain en pression du fluide est obtenu par la mise en rotation d'une roue R. L'homme de l'art pourra se reporter au manuel « *les techniques de l'ingénieur B4304* « pour comprendre le fonctionnement plus en détail d'une pompe rotodynamique. Ainsi, comme représenté en figure 10, le fluide entre dans la roue R axialement et ressort avec une composante radiale obtenue par la rotation de la roue. Le fluide est alors collecté par une volute V de forme torique entourant la roue, puis canaliser vers un tuyau de sortie T. Ainsi, les inventeurs ont conclu qu'une pompe rotodynamique dépourvue de volute 19"sup pouvait être utilisée pour faire circuler le sodium dans les échangeurs intermédiaires 16.

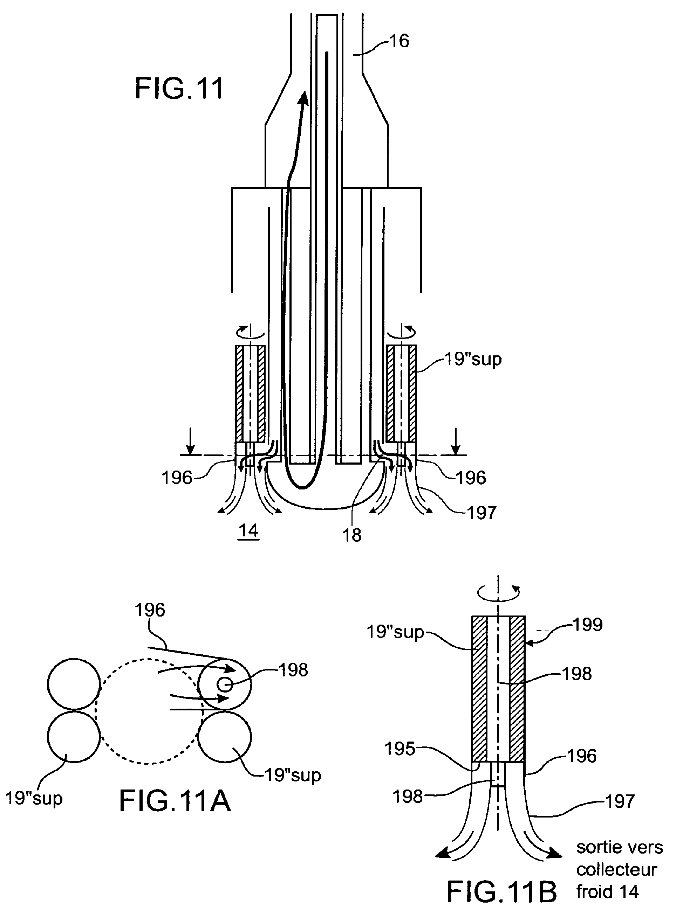

En figures 11, 11A et 11B, est représenté un exemple de réalisation avec un échangeur intermédiaire 16 comprenant quatre pompes rotodynamiques 19"sup. En sortie 18 de l'échangeur 16, le sodium est canalisé à partir des fenêtres de sortie 18 vers l'entrée 195 des pompes. Cette canalisation est réalisée à l'aide de déflecteurs 196, chaque déflecteur 196 canalisant une partie du débit de sortie de l'échangeur intermédiaire 16 de façon inversement proportionnel au nombre de pompes 19" sup. Ainsi pour un échangeur intermédiaire avec quatre pompes, chaque déflecteur 196 est fixé en regard d'approximativement un quart de la fenêtre de sortie 18 de l'échangeur (figure 11A). Le fluide ainsi canalisé entre axialement dans la roue 197 de la pompe, puis est monté en pression grâce à la rotation de la roue 197 solidaire de l'arbre 198 provoquée par l'actionnement du moteur électrique 199. Le fluide sort alors de la roue 197 directement dans le collecteur froid 14 du réacteur, sans qu'il y ait besoin d'une volute. Le moteur 199 mettant en rotation la roue 197 de la pompe peut-être constitué de bobines de stator recouvertes d'une tôle métallique étanche afin de pouvoir être totalement immergé dans le sodium contenu dans le réacteur.

## Revendications

1. Réacteur nucléaire SFR de type intégré (R2), comprenant une cuve (13) adaptée pour être remplie de sodium et à l'intérieur de laquelle sont agencés un coeur (11), des moyens de pompage (19') pour faire circuler le sodium primaire, des premiers échangeurs (16) de chaleur, dits échangeurs intermédiaires, adaptés pour évacuer la puissance produite par le coeur en fonctionnement normal des seconds échangeurs (25) de chaleur adaptés pour évacuer la puissance résiduelle produite par le coeur à l'arrêt lorsque les moyens de pompage sont également à l'arrêt, un dispositif de séparation délimitant une zone chaude (12) et une zone froide (14) dans la cuve, **caractérisé en ce que**:

   • le dispositif de séparation est constitué de deux parois (150, 151) chacune avec une partie sensiblement verticale (1501, 1511) agencée en entourant le coeur et une partie sensiblement horizontale (1500, 1510), les parties sensiblement horizontales étant séparées l'une de l'autre d'une hauteur (H) et l'espace délimité au dessus de la partie horizontale (1500) de la paroi supérieure (150) formant la zone chaude tandis que l'espace délimité en dessous de la partie horizontale (1510) de la paroi inférieure (151) forme la zone froide et les parties sensiblement horizontales (1500, 1510) sont agencées avec jeux (j1) par rapport à la cuve,
   • les échangeurs intermédiaires (16) sont agencés sensiblement verticalement avec jeux (j2) dans des premiers ajours pratiqués dans chaque partie horizontale de paroi du dispositif de séparation de manière à localiser leurs fenêtres de sortie (18) en dessous de la partie horizontale de la paroi inférieure,
   • les moyens de pompage à débit variable sont divisés en deux groupes (19'inf, 19'sup) en série hydraulique, l'un (19'inf) agencé en dessous de la partie horizontale de la paroi inférieure pour faire circuler le sodium de la zone froide vers la zone chaude en traversant le coeur, l'autre (19'sup) agencé à côté des échangeurs intermédiaires (16) pour faire circuler le sodium de la zone chaude vers la zone froide en traversant les échangeurs intermédiaires,
   • des moyens d'acquisition de température (6, 60) sont agencés dans l'espace délimité entre les parties horizontales (1500, 1510) des deux parois en étant répartis selon un axe sensiblement vertical pour déterminer en temps réel la stratification thermique dans cet espace,
   • des moyens d'asservissement reliés d'une part aux moyens d'acquisition de température et d'autre part aux deux groupes de pompage sont prévus pour modifier si nécessaire le débit d'au moins un groupe de pompage afin de maintenir un niveau satisfaisant de stratification en fonctionnement normal,
   • les seconds échangeurs (25) sont agencés sensiblement verticalement au dessus de la zone froide (14),
   • des moyens pour permettre la convection naturelle du sodium primaire depuis les seconds échangeurs vers la zone froide lorsque le coeur et les moyens de pompage sont également à l'arrêt,
   • l'ensemble des jeux (j1, j2) et la hauteur (H) entre les parties horizontales (1500, 1510) des deux parois du dispositif de séparation sont préalablement déterminés pour, en fonctionnement normal, reprendre les déplacements différentiels entre les parois (150, 151), échangeurs (16, 25) et cuve (13) et pour permettre d'établir en fonctionnement normal une stratification thermique du sodium primaire dans l'espace délimité entre les parties horizontales des deux parois (150, 151) et pour, en cas d'arrêt inopiné d'un seul groupe de pompage (19'), limiter les efforts mécaniques subis par les parois dûs à la partie du débit de sodium primaire passant dans lesdits jeux.

**2.** Réacteur nucléaire SFR de type intégré selon la revendication 1, dans lequel le groupe des moyens de pompage (19'sup) agencé à côté des échangeurs intermédiaires (16) pour faire circuler le sodium de la zone chaude vers la zone froide en traversant les échangeurs intermédiaires est en amont de ceux-ci.

**3.** Réacteur nucléaire SFR de type intégré selon la revendication 1, dans lequel le groupe des moyens de pompage (19'sup) agencé à côté des échangeurs intermédiaires (16) pour faire circuler le sodium de la zone chaude vers la zone froide en traversant les échangeurs intermédiaires est en aval de ceux-ci.

**4.** Réacteur nucléaire SFR de type intégré selon l'une des revendications précédentes, dans lequel le groupe des moyens de pompage agencé à côté des échangeurs intermédiaires (16) pour faire circuler le sodium de la zone chaude vers la zone froide en traversant les échangeurs intermédiaires comprend des pompes électromagnétiques (19'sup) et/ou des pompes rotodynamiques (19" sup) dépourvues de volute.

**5.** Réacteur nucléaire SFR de type intégré selon la revendication 4, dans lequel des pompes électromagnétiques (19'sup) et/ou des pompes rotodynamiques dépourvues de volute pour faire circuler le sodium de la zone chaude vers la zone froide sont en outre agencées en circuit fermé avec les fenêtres d'entrée (17) des échangeurs intermédiaires (16).

**6.** Réacteur nucléaire SFR de type intégré selon la revendication 5 en combinaison avec la revendication 2, dans lequel au moins une pompe électromagnétique (19'sup) ou une pompe rotodynamique dépourvue de volute est fixée en étant accolée dans le sens de sa hauteur à l'enveloppe extérieure d'un échangeur intermédiaire séparant les fenêtres d'entrée et de sortie et dans lequel un conduit relie directement la sortie de la pompe et l'une des fenêtres d'entrée de l'échangeur intermédiaire.

**7.** Réacteur nucléaire SFR de type intégré selon la revendication 5 en combinaison avec la revendication 3, dans lequel au moins une pompe électromagnétique (19'sup) ou une pompe rotodynamique dépourvue de volute est fixée en étant accolée dans le sens de sa hauteur à l'enveloppe extérieure d'un échangeur intermédiaire séparant les fenêtres d'entrée et de sortie et dans lequel un conduit relie directement l'entrée de la pompe et l'une des fenêtres de sortie de l'échangeur intermédiaire.

**8.** Réacteur nucléaire SFR de type intégré selon l'une des revendications précédentes, dans lequel le groupe de moyens de pompage (19'inf) agencé en dessous de la partie horizontale de la paroi inférieure pour faire circuler le sodium de la zone froide vers la zone chaude en traversant le coeur comprend des pompes électromagnétiques (19'inf).

**9.** Réacteur nucléaire SFR de type intégré selon la revendication 8, dans lequel les pompes électromagnétiques (19'inf) sont en outre agencées dans le supportage (110) du coeur.

**10.** Réacteur nucléaire SFR de type intégré selon la revendication 9, dans lequel les pompes électromagnétiques (19'inf) agencées dans le supportage du coeur sont en outre agencées sensiblement à l'aplomb des échangeurs intermédiaires.

**11.** Réacteur nucléaire SFR de type intégré selon la revendication 10, dans lequel lorsque la section droite des pompes électromagnétiques (19'inf) du dessous est supérieure à la section droite d'un échangeur intermédiaire, ce dernier comprend deux collerettes (9) transversales et séparées l'une de l'autre d'une distance qui correspond à la hauteur séparant les deux parties horizontales des parois, les collerettes (9) étant agencées chacune en regard des dites parties horizontales en définissant les jeux entre échangeur intermédiaire et parois.

**12.** Réacteur nucléaire SFR de type intégré selon la revendication 9 à 11, dans lequel l'agencement des pompes électromagnétiques (19'inf) dans le supportage du coeur permet de diriger le sodium primaire en sortie des dites pompes vers le pied des assemblages de combustible constituant le coeur.

**13.** Réacteur nucléaire SFR de type intégré selon l'une des revendications 9 à 12, dans lequel les pompes électromagnétiques (19'inf) sont reliées en lot à un échangeur intermédiaire au moyen d'une liaison souple (8), la souplesse de cette liaison permettant à la fois de s'accommoder des dilatations différentielles entre l'échangeur intermédiaire et le lot de pompes électromagnétiques et de réaliser un montage ou un démontage simultané de l'échangeur intermédiaire et du lot de pompes électromagnétiques par effort de poussée ou de traction depuis le dessus extérieur à la dalle de fermeture de la cuve.

**14.** Réacteur nucléaire SFR de type intégré selon la revendication 13, dans lequel les liaisons souples (8) sont en outre dimensionnées pour servir de logement aux câbles électriques d'alimentation des pompes électromagnétiques agencées dans le supportage du coeur.

**15.** Réacteur nucléaire SFR de type intégré selon l'une des revendications précédentes, dans lequel les moyens d'acquisition de température dans l'espace délimité par les deux parois sont constitués de thermocouples (60) fixés sur une ou plusieurs perches (6) à différents niveaux, la (les) perche(s) (6) étant agencée(s) sensiblement verticalement et extractible(s) depuis le dessus extérieur à la dalle de fermeture de la cuve.

**16.** Réacteur nucléaire SFR de type intégré selon l'une des revendications précédentes, dans lequel les seconds échangeurs (25) sont agencés avec jeux (j3) au moins dans des seconds ajours (15000) pratiqués dans la partie horizontale (150) de la paroi supérieure du dispositif de séparation de manière à localiser leurs fenêtres de sortie en dessous de celle-ci.

**17.** Réacteur nucléaire SFR de type intégré selon la revendication 16, dans lequel les fenêtres de sortie (250) des seconds échangeurs sont agencées immédiatement en dessous de la partie horizontale (1500) de la paroi supérieure (150) dans la hauteur la plus chaude de la stratification établie entre les deux parties horizontales.

**18.** Réacteur nucléaire SFR de type intégré selon l'une quelconque des revendications précédentes, dans lequel des troisièmes ajours (15100) pratiqués dans la partie horizontale (1510) de la paroi inférieure (151) sont agencés à l'aplomb des seconds ajours dans lesquels sont agencés individuellement les seconds échangeurs afin d'améliorer encore la convection naturelle du sodium primaire lorsque le coeur et les moyens de pompage sont à l'arrêt.

**Claims**

**1.** SFR nuclear reactor of the integrated type (R2), comprising a vessel (13) adapted to be filled with sodium and inside of which are provided a core (11), pumping means (19') for the flow of the primary sodium, first heat exchangers (16), known as intermediate exchangers, adapted to evacuate the power produced by the core during normal operation from second heat exchangers (25) adapted to remove the decay heat produced by the core while stopped when the pumping means are also stopped, a separation device defining a hot area (12) and a cold area (14) in the vessel, **characterised in that**:

- the separation device is constituted of two walls (150, 151) each with a substantially vertical portion (1501, 1511) provided surrounding the core and a substantially horizontal portion (1500, 1510), the substantially horizontal portions being separated from each other by a height (H) and the space defined above the horizontal portion (1500) of the upper wall (150) forming the hot area whereas the space defined below the horizontal portion (1510) of the lower wall (151) forms the cold area and the substantially horizontal portions (1500, 1510) are provided with clearances (j1) in relation to the vessel,
- the intermediate exchangers (16) are provided substantially vertically with clearances (j2) in first cuts made in each horizontal portion of the wall of the separation device so as to localise their outlet windows (18) below the horizontal portion of the lower wall,
- the pumping means with variable flow are divided into two groups (19' inf, sup) hydraulically in series, one (19'inf) provided below the horizontal portion of the lower wall for the flow of the sodium from the cold area to the hot area through the core, the other (19'sup) provided next to the intermediate exchangers (16) for the flow of the sodium from the hot area to the cold area through the intermediate exchangers,
- temperature acquisition means (6, 60) are provided in the space defined between the horizontal portions (1500, 1510) of the two walls in being spread out along a substantially vertical axis to determine in real time the thermal stratification in said space,
- automatic control means connected on the one hand to the temperature acquisition means and on the other hand to the two pumping groups are provided to modify if necessary the flow of at least one pumping group in order to maintain a satisfactory level of stratification during normal operation,
- the second exchangers (25) are provided substantially vertically above the cold area (14),
- means to enable the natural convection of the primary sodium from the second exchangers to the cold area when the core and the pumping means are also stopped,
- all of the clearances (j1, j2) and the height (H) between the horizontal portions (1500, 1510) of the two walls of the separation device are previously determined so as to, during normal operation, take up differential movements between the walls (150, 151), exchangers (16, 25) and vessel (13) and to make it possible to establish during normal operation a thermal stratification of the primary sodium in the space defined between the horizontal portions of the two walls (150, 151) and to reduce, in case of an unexpected stop of a single pumping group (19'), the mechanical stress applied to the walls and due to the portion of the primary sodium flow pasting between said clearances.

2. SFR nuclear reactor of the integrated type according to claim 1, wherein the group of pumping means (19'sup) provided next to the intermediate exchangers (16) for the flow of the sodium from the hot area to the cold area through the intermediate exchangers is upstream of them.

3. SFR nuclear reactor of the integrated type according to claim 1, wherein the group of pumping means (19'sup) provided next to the intermediate exchangers (16) for the flow of the sodium from the hot area to the cold area through the intermediate exchangers is downstream of them.

4. SFR nuclear reactor of the integrated type according to one of the preceding claims, wherein the group of pumping means provided next to the intermediate exchangers (16) for the flow of the sodium from the hot area to the cold area through the intermediate exchangers comprise electromagnetic pumps (19' sup) and/or rotodynamic pumps (19" sup) devoid of volute.

5. SFR nuclear reactor of the integrated type according to claim 4, wherein electromagnetic pumps (19'sup) and/or rotodynamic pumps devoid of volute for the flow of the sodium from the hot area to the cold area are moreover provided in closed circuit with the inlet windows (17) of the intermediate exchangers (16).

6. SFR nuclear reactor of the integrated type according to claim 5 in combination with claim 2, wherein at least one electromagnetic pump (19'sup) or one rotodynamic pump devoid of volute is fixed in being placed in the direction of its height against the outer casing of an intermediate exchanger separating the inlet and outlet windows and wherein a conduit directly connects the outlet of the pump and one of the inlet windows of the intermediate exchanger.

7. SFR nuclear reactor of the integrated type according to claim 5 in combination with claim 3, wherein at least one electromagnetic pump (19'sup) or one rotodynamic pump devoid of volute is fixed in being placed in the direction of its height against the outer casing of an intermediate exchanger separating the inlet and outlet windows and wherein a conduit directly connects the inlet of the pump and one of the outlet windows of the intermediate exchanger.

8. SFR nuclear reactor of the integrated type according to one of the preceding claims, wherein the group of pumping means (19'inf) provided below the horizontal portion of the lower wall for the flow of the sodium from the cold area to the hot area through the core comprises electromagnetic pumps (19' inf).

9. SFR nuclear reactor of the integrated type according to claim 8, wherein the electromagnetic pumps (19' inf) are moreover provided in the support (110) of the core.

10. SFR nuclear reactor of the integrated type according to claim 9, wherein the electromagnetic pumps (19'inf) provided in the core support are moreover arranged substantially directly in line with the intermediate exchangers.

11. SFR nuclear reactor of the integrated type according to claim 10, wherein when the straight section of the lower electromagnetic pumps (19' inf) is greater than the straight section of an intermediate exchanger, the latter comprises two transversal flanges (9) separated from each other by a distance that corresponds to the height separating the two horizontal portions of the walls, the flanges (9) each being arranged opposite said horizontal portions defining the clearances between the intermediate exchanger and walls.

12. SFR nuclear reactor of the integrated type according to claims 9 to 11, wherein the lay out of the electromagnetic pumps (19' inf) in the core support makes it possible to direct the primary sodium at the outlet from said pumps to the base of the fuel assemblies constituting the core.

13. SFR nuclear reactor of the integrated type according to one of claims 9 to 12, wherein the electromagnetic pumps (19' inf) are connected in sets to an intermediate exchanger by means of a flexible link (8), the flexibility of this link making it possible both to accommodate differential expansions between the intermediate exchanger and the set of electromagnetic pumps and to carry out a simultaneous assembly or a dismantling of the intermediate exchanger and the set of electromagnetic pumps by pushing or pulling force from the exterior top to the covering slab of the vessel.

14. SFR nuclear reactor of the integrated type according to claim 13, wherein the flexible links (8) are moreover dimensioned to serve as housings for electrical power supply cables of the electromagnetic pumps provided in the core support.

15. SFR nuclear reactor of the integrated type according to one of the preceding claims, wherein the temperature acquisition means in the space defined by the two walls are constituted of thermocouples (60) fixed on one or more booms (6) at different levels, the boom(s) (6) being arranged substantially vertically and extractible from the exterior top to the covering slab of the vessel.

16. SFR nuclear reactor of the integrated type according to one of the preceding claims, wherein the second exchangers (25) are provided with clearances (j3) at least in second cuts (15000) made in the horizontal portion (150) of the upper wall of the separation device so as to localise their outlet windows below it.

17. SFR nuclear reactor of the integrated type according to claim 16, wherein the outlet windows (250) of the second exchangers are arranged immediately below the horizontal portion (1500) of the upper wall (150) in the hottest height of the stratification established between the two horizontal portions.

18. SFR nuclear reactor of the integrated type according to any of the preceding claims, wherein third cuts (15100) made in the horizontal portion (1510) of the lower wall (151) are arranged directly in line with second cuts in which are provided individually the second exchangers in order to further improve the natural convection of the primary sodium when the core and the pumping means are stopped.

**Patentansprüche**

1. SFR-Kernreaktor des integrierten Typs (R2), der ein Becken (13) aufweist, das ausgebildet ist, um mit Natrium befüllt zu werden, und in dessen Innerem ein Kern (11), Pumpeinrichtungen (19'), um das primäre Natrium zirkulieren zu lassen, erste Wärmetauscher (16), die als Zwischenstufen-Wärmetauscher bezeichnet werden und ausgebildet sind, um die Leistung abzuführen, die durch den Kern bei normalem Betrieb erzeugt wird, und zweite Wärmetauscher (25) angeordnet sind, die ausgebildet sind, um die Restleistung abzuführen, die durch den abgeschalteten Kern erzeugt wird, wenn die Pumpeinrichtungen ebenfalls abgeschaltet sind, wobei eine Trennvorrichtung eine heiße Zone (12) und eine kalte Zone (14) in dem Becken trennt, **dadurch gekennzeichnet, dass**:

- die Trennvorrichtung durch zwei Wände (150, 151) gebildet ist, wobei jede einen im Wesentlichen vertikalen Teil (1501, 1511), der den Kern umgibt, und einen im Wesentlichen horizontalen Teil (1500, 1510) aufweist, wobei die im Wesentlichen horizontalen Teile voneinander um eine Höhe (H) getrennt sind und der Raum, der oberhalb des horizontalen Teils (1500) der oberen Wand (150) begrenzt wird, die heiße Zone bildet, hingegen der Raum, der unterhalb des horizontalen Teils (1510) der unteren Wand (151) begrenzt wird, die kalte Zone bildet und die im Wesentlichen horizontalen Teile (1500, 1510) mit Spiel (j1) bezüglich des Beckens angeordnet sind,
- die Zwischenstufen-Wärmetauscher (16) im Wesentlichen vertikal jeweils mit Spiel (J2) in den ersten Durchbrüchen angeordnet sind, die in jedem horizontalen Teil der Wand der Trennvorrichtung vorgesehen sind, so dass ihre Austrittsfenster (18) sich unterhalb des horizontalen Teils der unteren Wand befinden,
- die Pumpeinrichtungen von variablem Durchsatz in zwei in hydraulischer Reihe angeordnete Gruppen (19' inf, 19' sup) unterteilt sind, wobei die eine (19' inf) unterhalb des horizontalen Teils der unteren Wand angeordnet ist, um das Natrium von der kalten Zone zur heißen Zone, unter Durchqueren des Kerns, zirkulieren zu lassen, und die andere (19' sup) auf der Seite der Zwisehenstufen-Wärmetauscher (16) angeordnet ist, um das Natrium von der heißen Zone zur kalten Zone unter Durchqueren der Zwischenstufen-Wärmetauscher zirkulieren zu lassen,
- Temperaturerfassungseinrichtungen (6, 60) in dem Raum angeordnet sind, der zwischen den horizontalen Teilen (1500, 1510) der zwei Wände angeordnet sind, wobei sie entlang einer im Wesentlichen vertikalen Achse verteilt sind, um die thermische Schichtung in diesem Raum in Echtzeit zu bestimmen,
- Regeleinrichtungen, die zum einen mit den Temperaturerfassungseinrichtungen und zum anderen mit den zwei Pumpengruppen verbunden sind, vorgesehen sind, um, falls erforderlich, den Durchsatz mindestens einer Pumpengruppe zu modifizieren, um bei normalem Betrieb ein zufriedenstellendes Schichtungsniveau beizubehalten,
- die zweiten Wärmetauscher (25) im Wesentlichen vertikal oberhalb der kalten Zone (14) angeordnet sind,
- Einrichtungen, um die natürliche Konvektion des primären Natriums von den zweiten Wärmetauschern zur kalten Zone zu ermöglichen, wenn sowohl der Kern als auch die Pumpeinrichtungen abgeschaltet sind,
- die Gesamtheit der Spiele (j1, j2) und der Höhe (H) zwischen den horizontalen Teilen (1500, 1510) der zwei Wände der Trennvorrichtung vorab bestimmt sind, um bei Normalbetrieb die unterschiedlichen Verschiebungen zwischen den Wänden (150, 151), den Wärmetauschern (16, 25) und dem Becken (13) aufzunehmen und um zu ermöglichen, bei Normalbetrieb eine thermische Schichtung des primären Natriums in dem Raum zu etablieren, der zwischen den horizontalen Teilen der zwei Wände (150, 151) begrenzt wird, und um, im Fall eines unerwarteten Stillstands einer einzigen Pumpengruppe (19'), die mechanischen Beanspruchungen zu begrenzen, denen die Wände ausgesetzt sind und die bedingt sind durch den Teil der Durchflussmenge des primären Natriums, der durch diese Spiele hindurchgeht.

2.   SFR-Kernreaktor des integrierten Typs nach Anspruch 1, bei dem die Gruppe der Pumpeinrichtungen (19' sup), die auf der Seite der Zwischenstufen-Wärmetauscher (16) angeordnet ist, um das Natrium von der heißen Zone zur kalten Zone unter Durchqueren der Zwischenstufen-Wärmetauscher zirkulieren zu lassen, sich in Strömungsrichtung vor diesen befindet.

3.   SFR-Kernreaktor des integrierten Typs nach Anspruch 1, bei dem die Gruppe der Pumpeinrichtungen (19' sup), die auf der Seite der Zwischenstufen-Wärmetauscher (16) angeordnet ist, um das Natrium von der heißen Zone zur kalten Zone unter Durchqueren der Zwischenstufen-Wärmetauscher zirkulieren zu lassen, sich in Strömungsrichtung hinter diesen befindet.

4.   SFR-Kernreaktor des integrierten Typs nach einem der vorhergehenden Ansprüche, bei dem die Gruppe der Pumpeinrichtungen, die auf der Seite der Zwischenstufen-Wärmetauscher (16) angeordnet ist, um das Natrium von der heißen Zone zur kalten Zone unter Durchqueren der Zwischenstufen-Wärmetauscher zirkulieren zu lassen, elektromagnetische Pumpen (19' sup) und/oder Kreiselpumpen (19" sup) ohne Spiralgehäuse aufweist.

5.   SFR-Kernreaktor des integrierten Typs nach Anspruch 4, bei dem die elektromagnetischen Pumpen (19' sup) und/oder Kreiselpumpen ohne Spiralgehäuse, um das Natrium von der heißen Zone zur kalten Zone zirkulieren zu lassen, weiter in geschlossenem Kreislauf mit den Eintrittsfenstern (17) der Zwischenstufen-Wärmetauscher (16) angeordnet sind.

6.   SFR-Kernreaktor des integrierten Typs nach Anspruch 5 in Kombination mit Anspruch 2, bei dem mindestens eine elektromagnetische Pumpe (19' sup) oder eine Kreiselpumpe ohne Spiralgehäuse dadurch befestigt ist, dass sie in Höhenrichtung an der Außenhülle eines Zwischenstufen-Wärmetauschers angefügt ist, der die Eintritts- und Austrittsfenster trennt, und bei dem eine Leitung den Austritt der Pumpe und eines der Eintrittsfenster des Zwischenstufen- Wälmetauschers direkt verbindet.

7.   SFR-Kernreaktor des integrierten Typs nach Anspruch 5 in Kombination mit Anspruch 3, bei dem mindestens eine elektromagnetische Pumpe (19' sup) oder eine Kreiselpumpe ohne Spiralgehäuse dadurch befestigt ist, dass sie in Höhenrichtung an der Außenhülle eines Zwischenstufen-Wärmetauschers angefügt ist, der die Eintritts- und Austrittsfenster trennt, und bei dem eine Leitung den Eintritt der Pumpe und eines der Austrittsfenster des Zwischenstufen-Wärmetauschers direkt verbindet.

8.   SFR-Kernreaktor des integrierten Typs nach einem der vorhergehenden Absprüche, bei dem die Gruppe der Pumpeinrichtungen (19' inf), die unterhalb des horizontalen Teils der unteren Wand angeordnet ist, um das Natrium von der kalten Zone zur heißen Zone unter Durchqueren des Kerns zirkulieren zu lassen, elektromagnetische Pumpen (19' inf) aufweist.

9.   SFR-Kernreaktor des integrierten Typs nach Anspruch 8, bei dem die elektromagnetischen Pumpen (19' inf) weiter in der Trägereinrichtung (110) des Kerns angeordnet sind.

10.   SFR-Kernreaktor des integrierten Typs nach Anspruch 9, bei dem die elektromagnetischen Pumpen (19'inf), die in der Trägereinrichtung des Kerns angeordnet sind, weiter im Wesentlichen lotrecht zu den Zwischenstufen-Wärmetauschern angeordnet sind.

11.   SFR-Kernreaktor des integrierten Typs nach Anspruch 10, bei dem, wenn der Querschnitt der unterhalb angeordneten elektromagnetischen Pumpen (19'inf) größer als der Querschnitt eines Zwischenstufen-Wärmetausehers ist, Letzterer zwei Kragenstücke (9) aufweist, die transversal verlaufen und voneinander um einen Abstand getrennt sind, welcher der Höhe entspricht, die die beiden horizontalen Teile der Wände trennt, wobei die Kragenstücke (9) jeweils gegenüberliegend diesen horizontalen Teilen angeordnet sind und das Spiel zwischen dem Zwischenstufen-Wärmetauscher und den Wänden definieren.

12. SFR-Kernreaktor des integrierten Typs nach den Ansprüchen 9 bis 11, bei dem das Anordnen der elektromagnetischen Pumpen (19' inf) in der Trägereinrichtung des Kerns erlaubt, das aus den Pumpen austretende primäre Natrium zum Fuß der den Kern bildenden Brennstoffbaugruppen zu lenken.

13. SFR-Kernreaktor des integrierten Typs nach einem der Ansprüche 9 bis 12, bei dem die elektromagnetischen Pumpen (19' inf) in einer gewissen Anzahl mit einem Zwischenstufen-Wärmetauscher mittels einer flexiblen Verbindung (8) verbunden sind, wobei die Flexibilität dieser Verbindung ermöglicht, dass zugleich unterschiedlichen Dehnungen zwischen dem Zwischenstufen-Wärmetauscher und der gewissen Anzahl von elektromagnetischen Pumpen Rechnung getragen wird und auch eine gleichzeitige Montage oder Demontage des Zwischenstufen-Wärmetauschers und der gewissen Anzahl von elektromagnetischen Pumpen durch eine Druck- oder Zugkraft von der oberen Außenseite der Verschlussplatte des Beckens her realisiert wird.

14. SFR-Kernreaktor des integrierten Typs nach Anspruch 13, bei dem die flexiblen Verbindungen (8) weiter dimensioniert sind, um als Aufnahme für elektrische Versorgungskabel der elektromagnetischen Pumpen zu dienen, die in der Trägereinrichtung des Kerns angeordnet sind.

15. SFR-Kernreaktor des integrierten Typs nach einem der vorhergehenden Ansprüche, bei dem die Temperaturerfassungseinrichtungen in dem Raum, der durch die beiden Wände begrenzt wird, aus Thermoelementen (60) gebildet sind, die an einer oder mehreren Stangen (6) auf unterschiedlichen Niveaus befestigt sind, wobei die Stange(n) (6) im Wesentlichen vertikal angeordnet ist/sind und so, dass sie von der oberen Außenseite der Verschlussplatte des Beckens her entnommen werden können.

16. SFR-Kernreaktor des integrierten Typs nach einem der vorhergehenden Ansprüche, bei dem die zweiten Wärmetauscher (25) zumindest in den zweiten Durchbrüchen (15000) mit Spiel (j3) angeordnet sind, wobei die Durchbrüche in dem horizontalen Teil (150) der oberen Wand der Trennvorrichtung vorgesehen sind, so dass sich ihre Austrittsfenster unterhalb von dieser befinden.

17. SFR-Kernreaktor des integrierten Typs nach Anspruch 16, bei dem die Austrittsfenster (250) der zweiten Wärmetauscher unmittelbar unterhalb des horizontalen Teils (1500) der oberen Wand (150) auf der wärmsten Höhe der Schichtung angeordnet sind, die sich zwischen den zwei horizontalen Teilen etabliert hat.

18. SFR-Kernreaktor des integrierten Typs nach einem der vorhergehenden Ansprüche, bei dem die dritten Durchbrüche (15100), die in dem horizontalen Teil (1510) der unteren Wand (151) vorgesehen sind, lotrecht von den zweiten Durchbrüchen angeordnet sind, in denen die zweiten Wärmetauscher einzeln angeordnet sind, um die natürliche Konvektion des primären Natriums noch zu verbessern, wenn der Kern und die Pumpeinrichtungen abgeschaltet sind.

Fig.1

Fig.2

Fig.2A

Fig.2B

Fig.3

Fig.3A

**B-B**

Fig.3B

Fig.3C

191'

192'

19'

193'

$C_N$

Fig.4

Fig.5

$19'_{sup}$

16

$C_N$

11

13

14

8

$19'_{inf}$

111

fig5a

110

$19'_{inf}$

1100    1101

130

Fig.5A

194'

1102

191'

$C_N$

110

193'

192'

$H_{pomp}$

$D_{pomp}$

$19'_{inf}$

$C_N$

$C_N$

Fig.6

Fig.7

Profil axial de
température

Vitesse du
gradient
thermique

Fréquence de
commande des
pompes
19'

Mesure du
gradient
thermique

Suivi du
gradient
thermique

PID

25

6

1510

60

1510

13

Fig.8

28

29

16

C_N

B.C.C

24

17

S

165

6

16

13

1500

1501

1510

1511

11

C_N

19'sup

18

14

110

19'inf

130

1101  111  1100

FIG.9

FIG.9A

16

9        9

151      1500

1510

14

19'sup

1501

180      1511

18

19"sup

Tuyau de sortie T

Volute

Roue

V

Entrée du fluide

FIG.10

# FIG.11

16

19"sup

196 — 196

— 197

14    18

# FIG.11A

196

— 198

19"sup

19"sup

# FIG.11B

19"sup — — 199

— 198

195 — — 196

198 — — 197

sortie vers
collecteur
froid 14